# EUROPÄISCHE PATENTANMELDUNG

(11) **EP 4 178 016 A2**
(43) Veröffentlichungstag der Anmeldung: **10.05.2023**
(21) Anmeldenummer: 22204722.7
(22) Anmeldetag: 31.10.2022
(51) Int. Cl.: H01M 50/204, H01M 50/249, H01M 50/233

(54) **BATTERIEGEHÄUSEMODULANORDNUNG ZUR AUFNAHME ZUMINDEST EINER BATTERIEEINHEIT, INSBESONDERE EINER BATTERIEEINHEIT EINER TRAKTIONSBATTERIE, EINES ELEKTROMOTORISCH ANTREIBBAREN FAHRZEUGS**

(30) Priorität: 04.11.2021 DE 102021128754
(71) Anmelder: MAN Truck & Bus SE, 80995 München (DE)
(72) Erfinder: Hirschmann, Steffen, 91413 Neustadt an der Aisch (DE); Dietrich, Jens, 91560 Heilsbronn (DE)
(74) Vertreter: Hafner & Kohl PartmbB

(57) **Zusammenfassung**

Batteriegehäusemodulanordnung (100) zur Aufnahme zumindest einer Batterieeinheit (2), insbesondere einer Batterieeinheit (2) einer Traktionsbatterie, eines elektromotorisch antreibbaren Fahrzeugs (3), umfassend wenigstens zwei Batteriegehäusemodule (1, 1') jeweils bestehend aus einem Gehäuserahmen (4), welcher einen Innenraum (7) zur Aufnahme zumindest einer Batterieeinheit (2) definiert, wobei ein erstes Batteriegehäusemodul (1) auf einem zweiten Batteriegehäusemodul (1') gestapelt angeordnet ist.

## Beschreibung

Batteriegehäusemodulanordnung zur Aufnahme zumindest einer Batterieeinheit, insbesondere einer Batterieeinheit einer Traktionsbatterie, eines elektromotorisch antreibbaren Fahrzeugs.

Die Erfindung betrifft ein Batteriegehäusemodul zur Aufnahme zumindest einer Batterieeinheit, insbesondere einer Batterieeinheit einer Traktionsbatterie, eines elektromotorisch antreibbaren Fahrzeugs. Derartige Batteriegehäuse dienen in erster Linie dazu die in ihrem Inneren aufgenommene Batterieeinheit vor mechanischen Einflüssen zu schützen. So soll insbesondere bei mechanischer Einwirkung auf das Batteriegehäuse beispielsweise im Zuge eines Aufpralls des Fahrzeugs auf ein Hindernis eine Aufprallsicherheit gewährleistet werden. Dabei soll das Batteriegehäuse möglichst keine oder eine definierte Verformung erfahren, um eine Beschädigung der in ihrem Inneren aufgenommenen Batterieeinheit zu verhindern.

Entsprechende Batteriegehäuse sind aus dem Stand der Technik dem Grunde nach bekannt. So ist es bekannt, dass Batteriegehäuse über einen einstückigen wannenartigen Aufbau verfügen, sodass der Rahmen zusammen mit der einstückigen Wanne die Versteifungsstruktur des Batteriegehäuses ausbildet. Diese Batteriegehäuse werden direkt an einer Fahrzeugstruktur befestigt und sind hierbei nicht an den verfügbaren Fahrzeugbauraum anpassbar.

Der Erfindung liegt die Aufgabe zugrunde, eine Batteriegehäusemodulanordnung anzugeben, welches insbesondere kostengünstig und einfache herstellbar ist, ein geringes Gewicht aufweist und zugleich ein hohes Maß an Anpassbarkeit an die geometrischen Begebenheiten des das Batteriegehäusemodul aufnehmenden Fahrzeugs aufweist.

Die Aufgabe wird durch eine Batteriegehäusemodulanordnung zur Aufnahme zumindest einer Batterieeinheit, insbesondere einer Batterieeinheit einer Traktionsbatterie, eines elektromotorisch antreibbaren Fahrzeugs gemäß Anspruch 1 sowie durch eine Batteriegehäusemodul nach Anspruch 13 und durch ein Verfahren zur Herstellung einer Batteriegehäusemodulanordnung nach Anspruch 14 sowie durch ein Kraftfahrzeug gemäß Anspruch 15 gelöst. Die hierzu abhängigen Ansprüche betreffen mögliche Ausführungsformen der Batteriegehäusemodulanordnung.

Die Erfindung betrifft eine Batteriegehäusemodulanordnung zur Aufnahme zumindest einer Batterieeinheit, insbesondere einer Batterieeinheit einer Traktionsbatterie, eines elektromotorisch antreibbaren Fahrzeugs. Die Batteriegehäusemodulanordnung umfasst wenigstens zwei Batteriegehäusemodule jeweils bestehend aus einem Gehäuserahmen, welcher einen Innenraum zur Aufnahme zumindest einer Batterieeinheit definiert, wobei ein erstes Batteriegehäusemodul auf einem zweiten Batteriegehäusemodul, insbesondere unmittelbar, gestapelt angeordnet ist. Dadurch, dass wenigstens zwei, insbesondere wenigstens drei, Batteriegehäusemodule zur Ausbildung einer Batteriegehäusemodulanordnung gestapelt angeordnet werden, kann eine an die Erfordernisse des jeweiligen Fahrzeugs angepasste Energiespeichergröße bzw. Baugröße einer Batteriebaugruppe gewählt werden. Durch den modularen Aufbau kann eine, insbesondere auf unterschiedliche Fahrzeuge anpassbare und gleichzeitig in einem hohen Grad auf Gleichteilen beruhende Konstruktion erreicht werden.

Die gestapelte Anordnung der wenigstens zwei Batteriegehäusemodule kann beispielsweise derart erfolgen, dass die Haupterstreckungsebene eines ersten Batteriegehäusemoduls im Endmontagezustand parallel zu der Haupterstreckungsebene wenigstens eines weiteren Batteriegehäusemoduls angeordnet ist. Als Haupterstreckungsebene ist die Ebene zu verstehen, welche die hauptsächliche Erstreckung des Batteriegehäusemoduls bildet. Die wenigstens zwei Batteriegehäusemodule können zweckmäßiger Weise deckend zueinander und/oder koaxial zueinander angeordnet, insbesondere unmittelbar miteinander verbunden, sein.

Die aus wenigstens zwei miteinander verbundenen gestapelten Batteriegehäusemodulen bestehende Baugruppe der Batteriegehäusemodulanordnung kann eine selbsttragende Baugruppe ausbilden. So kann diese Baugruppe einfach vormontiert und im Fahrzeugmontageprozess zu einem Chassis verbracht und dort montiert werden.

Bevorzugt sind die Rahmenkörper, besonders bevorzugt die Gehäuserahmen, der wenigstens zwei Batteriegehäusemodule ähnlich oder identisch ausgebildet. Bevorzugt kann der Gehäuserahmen der wenigstens zwei Batteriegehäusemodule als Gleichteil ausgebildet sein oder zumindest überwiegend aus Gleichteilen hergestellt werden.

Die wenigstens zwei gestapelt angeordneten Batteriegehäusemodule können beispielsweise über eine Verbindungseinrichtung miteinander verbunden sein, wobei die Verbindungseinrichtung die wenigstens zwei gestapelten Batteriegehäusemodule im Endmontagezustand mit einer in den zusammengesetzten Zustand der Batteriegehäusemodule gerichteten Haltekraft vorspannt. Die Haltekraft kann damit zu eine Druckkraft bzw. zu einem Zusammendrücken der Batteriegehäusemodule an deren Kontaktstelle führen. Diese Druckkraft kann wenigstens einen Innenraum, insbesondere beide Innenräume, der Batteriegehäusemodule zur Umwelt abdichten. Alternativ oder zusätzlich kann die Haltekraft eine stabilitätssteigernde Funktion für die gestapelten Batteriegehäusemodule, insbesondere bzgl. Seitenkräfte innehaben.

Alternativ oder zusätzlich kann die Verbindungseinrichtung eine Vielzahl an, insbesondere stangenförmiger, Verbindungselemente umfassen, welche zumindest abschnittsweise, bevorzugt überwiegend, besonders bevorzugt vollständig, durch einen Rahmenkörper und/oder durch ein Verbindungsmittel des ersten Batteriegehäusemoduls und durch einen Rahmenkörper und/oder ein Verbindungsmittel des zweiten Batteriegehäusemoduls hindurchgeführt sind. Dabei kann das Verbindungselement durch Öffnungen in dem den Rahmenkörper und/oder das Verbindungsmittel bildenden Körper hindurchgreifen bzw. hindurchtreten. Mit anderen Worten kann ein Verbindungselement sich über die Höhe des Stapels erstrecken, insbesondere kann hierbei das Verbindungselement zumindest abschnittsweise, insbesondere vollständig, innerhalb des Hauptbegrenzungsvolumens der Batteriegehäusemodulanordnung angeordnet sein. Bevorzugt ragt hierbei das wenigstens eine Verbindungselement an wenigstens einem, insbesondere an zwei gegenüberliegenden, Endbereich(en) der gestapelten Batteriegehäusemodule über diese hinaus. Das wenigstens eine über die gestapelten Batteriegehäusemodule abstehende Ende des Verbindungselements kann zur Aufnahme eines Verbindungsteils dienen, beispielsweise kann das Verbindungselement an seinem Endbereich einen Gewindeabschnitt aufweisen, wobei an diesem überstehenden Endbereich eine Mutter oder ein mit dem Gewinde der Gewindestange in Eingriff bringbares Element angeordnet bzw. befestigt werden kann.

Das Verbindungselement kann eingerichtet sein, im Endmontagezustand eine Spannkraft auf die übereinandergestapelten Batteriegehäusemodule aufzubringen, sodass die Batteriegehäusemodule z. B. in einem vorgespannten Zustand an einer Fahrzeugstruktur montierbar sind. Die Gewindestange kann beispielsweise an den aus der Batteriegehäusemodulanordnung überstehenden Bereichen mit Muttern zur Aufbringung einer Spannkraft verschraubt sein. Bevorzugt sind die Verbindungselemente rechtwinklig zur Haupterstreckungsebene wenigstens eines Batteriegehäusemoduls und/oder zur Trennebene zwischen wenigstens zwei Batteriegehäusemodulen verlaufend angeordnet. Durch die gestapelte Anordnung der Batteriegehäusemodule wird ein kompakter und zugleich stabiler Aufbau der Batteriegehäusemodulanordnung ermöglicht. Je nach verfügbarem Platz und/oder nach gewünschter Größe der Kapazität der Batterie können mehrere Batteriegehäusemodule übereinandergestapelt und miteinander verbunden werden. Dabei kann es sich als zweckmäßig erweisen, wenn der Stapel an Batteriegehäusemodulen an einer ersten Stirnseite mit einem Deckelement und an der gegenüberliegenden Stirnseite mit einem Bodenelement verschlossen wird bzw. verschließbar ist.

Es ist möglich, dass die Verbindungseinrichtung wenigstens zwei gestapelte Batteriegehäusemodule und (a) einen ein oberes Batteriegehäusemodul abschließenden Deckelkörper und/oder (b) einen ein unteres Batteriegehäusemodul abschließenden Bodenkörper miteinander verbindet. Folglich wird die deckel- und/oder bodenbildende Funktion zumindest abschnittsweise, bevorzugt überwiegend, besonders bevorzugt vollständig, durch einen Deckelkörper bzw. einen Bodenkörper erfüllt.

Vermittels der Verbindungseinrichtung kann beispielsweise eine Haltekraft und damit eine Vorspannkraft zwischen den gestapelt angeordneten Batteriegehäusemodulen und dem Deckelkörper und/oder dem Bodenkörper einwirken. Diese Vorspannkraft kann wiederum das Abdichten und/oder die Stabilität der Verbindung von Deckelkörper bzw. Bodenkörper zu dem benachbarten Batteriegehäusemodul unterstützen. So ist es möglich, dass die Verbindungseinrichtung, insbesondere wenigstens ein stangenförmiges Verbindungselement der Verbindungseinrichtung, im Endmontagezustand beispielsweise durch einen Kanalabschnitt der Batteriegehäusemodule und durch einen Kanalabschnitt bzw. eine Öffnung des Deckelkörpers und/oder des Bodenkörpers hindurchgeführt ist.

An einem Kontaktbereich der Rahmenkörper zweier gestapelt aneinander gesetzter Batteriegehäusemodule können beispielsweise zumindest abschnittsweise, bevorzugt überwiegend, besonders bevorzugt vollumfänglich, eine Eingriffs- und Gegenelementstruktur an den jeweiligen Rahmenkörpern ausgebildet sein. Die Eingriffs- und Gegenelementstruktur kann beispielsweise die Widerstandsfähigkeit der gestapelt angeordneten Batteriegehäusemodule, insbesondere hinsichtlich parallel zur Haupterstreckungsebene einwirkender Seitenkräfte, positiv beeinflussen. Auch ist es möglich eine etwaige Halte- bzw. Vorspannkraft einer Verbindungseinrichtung zu reduzieren, da der Formschluss vermittels der Eingriffs- und Gegenelemente die Notwendigkeit einer hohen Haltekraft in Richtung des zusammengesetzten Zustands der Batteriegehäusemodule zum Trotzen von senkrecht zur Haltekraft einwirkenden Seitenkräften reduziert.

Die Eingriffs- und Gegenelementstruktur kann beispielsweise derart ausgebildet sein, dass ein erster Rahmenkörper an seiner dem zweiten Rahmenkörper zugewandten Oberfläche eine Eingriffsstruktur umfasst, welche in eine, insbesondere korrespondierende, an der dem ersten Rahmenkörper zugewandten Oberfläche des zweiten Rahmenkörpers angeordnete oder ausgebildete Gegeneingriffsstruktur eingreift. Beispielsweise ist die Eingriffs- und Gegenelementstruktur als Profilierung des Rahmenkörpers ausgebildet, bevorzugt kann diese Profilierung im Zuge des Umformverfahrens des Rahmenkörpers ausgebildet werden.

Optional kann im Bereich, insbesondere innerhalb der als Ausnehmung ausgebildeten Gegenelementstruktur ein Dichtmittel angeordnet sein, welches im zusammengesetzten Zustand zu einer Abdichtung des Innenraums im Kontaktbereich der Rahmenkörper führt.

Es ist möglich, dass eine mit der Eingriffs- und Gegenelementstruktur der Batteriegehäusemodule korrespondierende Eingriffs- und/oder Gegenelementstruktur an dem Deckelkörper und/oder an dem Bodenkörper ausgebildet ist.

Das wenigstens eine Batteriegehäusemodul dient zur Aufnahme zumindest einer Batterieeinheit, insbesondere einer Batterieeinheit einer Traktionsbatterie, eines elektromotorisch antreibbaren Fahrzeugs. Damit dient die bestimmungsgemäß im Batteriegehäusemodul aufzunehmende Batterieeinheit zum Vortrieb eines Fahrzeugs, bevorzugt eines Kraftfahrzeugs, besonders bevorzugt eines Nutzfahrzeugs. Das Batteriegehäusemodul umfasst wenigstens einen Gehäuserahmen, welcher einen Innenraum zur Aufnahme zumindest einer Batterieeinheit definiert, wobei der Gehäuserahmen zumindest einen profilförmigen Rahmenkörper umfasst. Ferner weist das Batteriegehäusemodul wenigstens einen Versteifungskörper auf, welcher in dem Innenraum angeordnet ist und den Innenraum in separate Bereiche unterteilt. Innerhalb der separaten bzw. separierten Bereiche können Batterieeinheiten aufgenommen werden. Das Batteriegehäusemodul umfasst ferner wenigstens ein Verbindungsmittel, welches eine Verbindungsschnittstelle zum Verbinden mit dem Versteifungskörper unter Ausbildung einer kraftübertragenden Struktur des Batteriegehäusemoduls aufweist, wobei die kraftübertragende Struktur des Batteriegehäusemoduls eingerichtet ist, Kräfte auf eine das Batteriegehäusemodul tragende Fahrzeugstruktur zu übertragen. Dadurch, dass die Versteifungskörper den Innenraum in separate Bereiche unterteilen, können sich die Versteifungskörper beispielsweise zumindest abschnittsweise, bevorzugt überwiegend, besonders bevorzugt vollständig von einer ersten Gehäuserahmenseite zu einer zweiten Gehäuserahmenseite erstrecken. D. h. z. B., dass der Versteifungskörper eine längliche Form aufweisen kann und sich zumindest abschnittsweise, bevorzugt überwiegend, besonders bevorzugt vollständig, über die Strecke zwischen der ersten Gehäuserahmenseite zu einer weiteren Gehäuserahmenseite, insbesondere einer gegenüberliegenden Gehäuserahmenseite erstreckt. So kann sich der Versteifungskörper beispielsweise parallel oder rechtwinklig zu einem geradlinigen Gehäuserahmenabschnitt und/oder parallel oder rechtwinklig zu einer Längsachse des Batteriegehäusemoduls erstrecken.

Die im Innenraum aufgenommenen Batterieeinheiten können beispielsweise unmittelbar an den den Innenraum durchziehenden bzw. unterteilenden Versteifungskörpern befestigt sein. Dabei können die Versteifungskörper als Tragstruktur für die im Innenraum angeordneten Batterieeinheiten fungieren. Damit kann wenigstens eine, insbesondere sämtliche, Batterieeinheit(en) über wenigstens einen Versteifungskörper und wenigstens ein Verbindungsmittel mit der kraftübertragenden Struktur des Batteriegehäusemoduls und damit mit der das Batteriegehäusemodul tragenden Fahrzeugstruktur tragend verbunden sein.

Die kraftübertragende Struktur des Batteriegehäusemoduls kann beispielsweise die im überwiegenden Maße, insbesondere die im nahezu ausschließlichen Maße, auf das Batteriegehäusemodul einwirkenden Kräfte übertragende bzw. kraftleitende Struktur bilden. Mit anderen Worten kann die kraftübertragende Struktur die wesentliche Tragfunktion der in oder an dem Batteriegehäusemodul aufgenommenen Elemente ausbilden. Dadurch, dass die wesentliche Tragstruktur durch die Versteifungskörper und die Verbindungsmittel zumindest überwiegend, bevorzugt nahezu ausschließlich, besonders bevorzugt ausschließlich, an die das Batteriegehäusemodul tragende Fahrzeugstruktur übertragen wird, kann der Gehäuserahmen oder die übrigen Bestandteile des Gehäuserahmens entsprechend mit geringen Anforderungen an deren mechanische Belastbarkeit, insbesondere Steifigkeit und/oder Festigkeit, ausgebildet werden. Hierdurch kann ein Aufbau des Batteriegehäusemoduls erzielt werden, welcher insgesamt eine hohe Aufprallsicherheit bei gleichzeitig geringem Gewicht aufweist und kostengünstig herstellbar ist. So ist es möglich, dass dem Gehäuserahmen, insbesondere dem profilförmigen Rahmenkörper, eine Funktion zukommt, welche die Schaffung einer Hülle für den Innenraum bildet oder welche das Tragen eines Hüllelements zur Bildung einer Hülle für den Innenraum gewährleistet. So kann der Rahmenkörper zum Verbinden, insbesondere zum Tragen, von den Innenraum verhüllenden Elementen dienen, wie beispielsweise einem Deckel- und/oder Bodenelement zum Verschließen, insbesondere zum mediendichten Abdichten, des Innenraums.

Der profilförmige Rahmenkörper kann beispielsweise seine wesentliche Form, insbesondere seine wesentliche Querschnittsform, in einem Umformverfahren, beispielsweise einem Biegeumformverfahren, erhalten haben. Damit kann der profilförmige Rahmenkörper kostengünstig hergestellt werden. Dies deshalb, da die Anbindung der Versteifungskörper, bevorzugt überwiegend, besonders bevorzugt ausschließlich, an den Verbindungsmitteln und über diese direkt oder unter Zwischenschaltung eines sich im Abstützbereich des Verbindungsmittels befindlichen Abschnitts des Rahmenkörper an der tragenden Fahrzeugstruktur erfolgt. Damit wird die Überleitung der Kräfte zwischen tragender Fahrzeugstruktur und dem Versteifungskörper zumindest überwiegend, bevorzugt nahezu ausschließlich, über das Verbindungsmittel ausgeführt.

Die Verbindungsschnittstelle kann beispielsweise eine, insbesondere unmittelbare, kraft- und/oder form- und/oder stoffschlüssige Verbindung von Verbindungsmittel und Versteifungskörper ausbilden.

Die wenigstens eine Batterieeinheit kann in gewissem Maße nach Art einer schwimmenden Lagerung an den Versteifungskörpern gelagert sein. D. h. z. B., dass die Batterieeinheit in Richtung entlang der Längsachse der Versteifungskörper im Falle einer entsprechenden Kraftbeaufschlagung, z. B. im Crashfall, eine Bewegbarkeit derart aufweist oder derart verschoben wird, sodass die Batterieeinheit im Crashfall und dem Anliegen einer einen definierten Kraftwert überscheitenden Kraft, eine Ausweichbewegung ausführen kann. Mit anderen Worten kann ein Spalt zwischen der Batterieeinheit und dem Gehäuserahmen zumindest in Richtung der Längserstreckung der Versteifungskörper vorgesehen sein, sodass bei parallel oder in einem spitzen Winkel, bevorzugt in einem Winkel von kleiner 45°, zur Längserstreckung der Versteifungskörper einwirkenden äußeren Kraft die von dem Versteifungskörper getragene Batterieeinheit einen Freiraum für eine Ausweichbewegung innerhalb des Batteriegehäusemoduls vorfindet. Bevorzugt sind die Versteifungskörper im Endmontagezustand des Batteriegehäusemoduls senkrecht zur Fahrzeuglängsachse ausgerichtet, sodass zumindest bei einem Seitenaufprall auf das Fahrzeug ein entsprechender Freiraum für eine Ausweichbewegung der Batterieeinheit vorliegt.

Es ist möglich, dass wenigstens eine Batterieeinheit, insbesondere sämtliche in dem Batteriegehäusemodul aufgenommenen Batterieeinheiten, zumindest überwiegend, bevorzugt ausschließlich, über die Versteifungskörper mit den Verbindungsmitteln verbunden sind. Beispielsweise ist die wenigstens eine Batterieeinheit unmittelbar mit wenigstens zwei Versteifungskörpern verbunden bzw. wird von diesen getragen, wobei über die wenigstens zwei Versteifungskörper und deren Verbindung mit den Verbindungsmitteln eine tragende Verbindung der wenigstens einen Batterieeinheit mit dem Rahmenkörper und der das Batteriegehäusemodul tragenden Fahrzeugstruktur vorliegt. Bevorzugt sind die Batterieeinheiten ausschließlich über Versteifungskörper und Verbindungsmittel an einer das Batteriegehäusemodul tragenden Tragstruktur eines Fahrzeugs tragend verbunden. Beispielsweise kann die wenigstens eine Batterieeinheit durch paarweise dieser zugeordnete, und insbesondere parallel zueinander verlaufende, Versteifungskörper getragen werden.

Es ist möglich, dass das Verbindungsmittel eine erste Verbindungsschnittstelle zum Verbinden mit dem Versteifungskörper und eine weitere Verbindungsschnittstelle zum Verbinden mit einer das Batteriegehäusemodul tragenden Fahrzeugstruktur umfasst. Diese erste und/oder die zweite Verbindungsschnittstelle kann beispielsweise als Schnittstelle(n) einer Schraubverbindung ausgebildet sein. Beispielsweise kann das Verbindungsmittel eine direkte bzw. unmittelbare Verbindung über die erste Verbindungsschnittstelle mit dem Versteifungskörper und über die weitere Verbindungsschnittstelle eine direkte bzw. unmittelbare Verbindung mit der das Batteriegehäusemodul tragenden Fahrzeugstruktur eingehen. Das Verbindungsmittel kann bevorzugt als einstückiger Körper ausgebildet sein, welcher entsprechende Schnittstellen zum Eingehen einer direkten mechanischen Kopplung mit dem Versteifungskörper und dem das Batteriegehäusemodul tragenden Fahrzeugstruktur umfasst. Folglich kann vermittels eines derartigen Verbindungsmittels eine unmittelbare Kraftübertragung zwischen dem Versteifungskörper und der das Batteriegehäuse tragenden Fahrzeugstruktur erzielt werden. Die erste und/oder die weitere Verbindungsschnittstelle kann als Gewindebolzen oder als Gewindebohrung ausgebildet sein. Beispielsweise kann die Fahrzeugtragstruktur eine Durchgangsbohrung zur Durchführung einer Schraube aufweisen, welche nach Durchführen durch diese Durchgangsbohrung und einer gehäuserahmenseitigen Durchtrittsöffnung in einem Gewindeabschnitt des Verbindungsmittels eingreift.

Das wenigstens eine Verbindungsmittel kann beispielsweise an einer dem Innenraum zugewandten Seite des Rahmenkörpers angeordnet sein. Alternativ oder zusätzlich kann wenigstens ein Verbindungsmittel an einer dem Innenraum abgewandten Seite eines Rahmenkörpers angeordnet sein. Beispielsweise weist der Gehäuserahmen zwei profilförmige Rahmenkörper auf, wobei an einem ersten Rahmenkörper ein erstes Verbindungsmittel an einer dem Innenraum zugewandten Seite dieses Rahmenkörpers und an einem weiteren Rahmenkörper ein weiteres Verbindungsmittel an einer dem Innenraum abgewandten Seite des Rahmenkörpers angeordnet ist. Ein an der dem Innenraum abgewandten Seite des Rahmenkörpers angeordnetes Verbindungsmittel kann sonach von außerhalb des Rahmenkörpers an diesen angesetzt, insbesondere ausgerichtet, und fixiert werden.

In einer optionalen Ausführungsform kann der Gehäuserahmen beispielsweise zumindest abschnittsweise durch wenigstens zwei, zwischen sich einen Zwischenraum aufweisende Rahmenkörper gebildet sein, wobei zumindest abschnittsweise in dem Zwischenraum ein, insbesondere die Rahmenkörper miteinander verbindendes, Verbindungsmittel angeordnet ist. Damit kann das Verbindungsmittel Teil des Gehäuserahmens sein, sodass der Gehäuserahmen teilweise durch profilförmige Rahmenkörper und teilweise durch Verbindungsmittel gebildet wird. Dieser Aufbau kann auch als Hybridstruktur des Rahmenkörpers bezeichnet werden, da der Gehäuserahmen sowohl profilförmige Rahmenkörper als auch Verbindungsmittel umfasst. Auch kann beispielsweise ein Gehäuserahmen einen ersten Abschnitt nach Art der Hybridstruktur und einen weiteren Abschnitt mit an der dem Innenraum zugewandten oder abgewandten Seite des Rahmenkörpers angeordneten Verbindungsmitteln umfassen.

In einer zweckmäßigen Weiterbildung kann es vorgesehen sein, dass der Gehäuserahmen rechteckig ausgebildet ist und/oder die Form eines Quaders aufweist, wobei wenigstens (a) ein zwei Rahmenkörper oder (b) ein einen Rahmenkörper mit einem Verbindungsmittel verbindender Eckabschnitt des Gehäuserahmens durch ein Eckelement gebildet wird. Das wenigstens eine Eckelement, insbesondere sämtliche Eckelemente, kann bzw. können beispielsweise, bevorzugt überwiegend, besonders bevorzugt zumindest nahezu vollständig, aus einem urformenden (Umformen) und/oder trennenden (Trennen) Fertigungsverfahren hergestellt sein. Bevorzugt kann das Eckelement aus einem trennenden Fertigungsverfahren oder aus einem additiven Fertigungsverfahren hergestellt sein. Beispielsweise wurde das Eckelement in einem zerspanenden Fertigungsverfahren hergestellt. In einer optionalen Ausführungsform kann das Eckelement als Verbindungsmittel ausgebildet sein und dabei die Verbindungsschnittstellen zur, insbesondere unmittelbaren, Verbindung mit der Fahrzeugstruktur und zur, insbesondere unmittelbaren, Verbindung mit dem Versteifungskörper aufweisen. Beispielsweise kann der Gehäuserahmen aus wenigstens einem Rahmenkörper, insbesondere aus einer Vielzahl an Rahmenkörpern, und einer ersten Gruppe an Verbindungsmitteln und einer zweiten Gruppe an Verbindungsmitteln gebildet sein, wobei die erste Gruppe an Verbindungsmitteln als Eckelemente ausgebildet ist und die zweite Gruppe an Verbindungsmitteln in Zwischenräumen zweier benachbarter und/oder parallel zueinander ausgerichteter Rahmenkörper angeordnet sind und die Rahmenkörper, insbesondere geradlinig, verbinden. Ferner kann es vorgesehen sein, dass eine erste Gruppe an Verbindungsmitteln als Eckelemente eines Gehäuserahmen ausgebildet ist und eine weitere Gruppe an Verbindungsmitteln als an der dem Innenraum zugewandten Seite oder dem Innenraum abgewandten Seite des Rahmenkörpers angeordnete Verbindungsmittel ausgebildet ist. An dem wenigstens einen Eckelement können die unmittelbar mit dem Eckelement verbundenen Rahmenkörper beispielsweise in einem rechten Winkel zueinander ausgerichtet sein.

Der profilartige Rahmenkörper und/oder der Versteifungskörper kann bzw. können beispielsweise aus einem Umformverfahren hergestellt sein. Dabei kann dieser umformende Verfahrensschritt die wesentliche, bevorzugt die überwiegende, Formgebung des Rahmenkörpers und/oder des Versteifungskörpers betreffen. Beispielsweise ist bzw. sind der profilartige Rahmenkörper und/oder der Versteifungskörper in einem Biegeumformverfahren, besonders bevorzugt in einem Profilierverfahren, hergestellt worden. Ein Profilierverfahren kann hierbei ein Walzprofilieren bzw. ein Rollformen umfassen. Der Rahmenkörper und/oder der Versteifungskörper kann bzw. können beispielsweise in einem Biegeumformverfahren mit drehender Werkzeugbewegung oder mit geradliniger Werkzeugbewegung hergestellt worden sein. Dabei kann das Biegeumformverfahren dem Rahmenkörper und/oder dem Versteifungskörper seine wesentliche Querschnittsgestalt aufprägen. So ist es möglich, dass der Rahmenkörper und/oder der Versteifungskörper aus einem umgeformten Blechteil besteht. Vor oder nach dem Profilierungsverfahren können Öffnungen (z. B. durch Stanzen oder Laserschneiden) herausgetrennt werden.

Der Rahmenkörper und/oder der Versteifungskörper kann bzw. können aus Stahl oder Aluminium bestehen.

Die Herstellung des Gehäuserahmens des Batteriegehäusemoduls kann beispielsweise folgende Verfahrensschritte umfassen: (a) Bereitstellung eines Blechkörpers, (b) Trennen von definierten Abschnitten aus dem Blechkörper, z. B. Einbringen von Bohrungen und/oder Ausschnitt für ein später erfolgendes Umbiegen von Eckbereichen in den Blechkörper; (c) Ausführen eines Umbiegeprozesses, insbesondere eines Walz- oder Rollprozess zur Ausbildung einer Profilform des Rahmenkörpers, hierzu kann beispielsweise eine Profilform erzeugt werden, welche mäanderförmig umgebogene Abschnitte des Blechkörpers umfasst. Es kann vorgesehen sein, dass dieser Umbiegeprozess gemäß (c) das Umbiegen von Abschnitten des Blechkörpers zur Ausbildung der Eckbereiche des Batteriegehäuses nicht umfasst. Danach kann ein (d) Nachtrennschritt erfolgen, z. B. ein weitergehendes Ausräumen von für ein später erfolgendes Umbiegen zur Ausbildung von Eckbereichen bildenden Ausschnitten, vorzugsweise kann dies durch ein Herausstoßen des zu trennenden Materials erfolgen. Schließlich erfolgt ein (e) Biegen bzw. Umbiegen des bearbeiteten und in eine Profilform überführten Blechkörpers bzw. Rahmenkörpers zur Ausbildung einer kastenartigen bzw. quaderförmigen Form, welche einen Innenraum definiert. Damit kann ein kastenartiger Körper durch dreifaches Biegen des Rahmenkörpers gebildet werden, wobei dieser an drei Ecken umgebogen und am vierten Eck zusammengeführt, insbesondere zusammengeschweißt, wird. Anschließend wird der wenigstens eine Versteifungskörper und die Verbindungsmittel an den Rahmenkörper montiert, insbesondere können hierbei zumindest teilweise Schweißverbindungen zwischen dem Versteifungskörper und dem Verbindungsmittel und/oder zwischen dem Verbindungsmittel und dem Rahmenkörper erzeugt werden.

Es ist möglich, dass der Rahmenkörper und/oder der Versteifungskörper zumindest abschnittsweise eine mäanderförmige Querschnittsgeometrie aufweist. Dieser mäanderförmig verlaufende Querschnittsabschnitt kann beispielsweise bereichsweise einen Abschlussabschnitt des Blechteils berühren. Bevorzugt wird durch bereichsweise sich berührende Bereiche der Querschnittsgeometrie wenigstens ein Hohlraum und/oder eine Aufnahmekammer gebildet. Mit anderen Worten wird der Rahmenkörper und/oder der Versteifungskörper ausgehend von einem Blechteil derart umgebogen, dass dieses umgebogene Blechteil wenigstens einen Hohlraum und/oder wenigstens eine Aufnahmekammer durch Wandungsabschnitte des Blechteils ausbildet bzw. definiert.

Der profilförmige Rahmenkörper und/oder der Versteifungskörper kann bzw. können alternativ zumindest abschnittsweise, bevorzugt überwiegend, besonders bevorzugt vollständig, in einem Strangpressverfahren hergestellt worden sein.

Der wenigstens eine Versteifungskörper kann beispielsweise über wenigstens ein Verbindungsmittel mit dem wenigstens einen Rahmenkörper verbunden sein. Typischerweise kann der wenigstens eine Versteifungskörper, insbesondere sämtliche Versteifungskörper, ausschließlich über Verbindungsmittel mit Rahmenkörpern des Gehäuserahmens verbunden sein. Bevorzugt sind sämtliche Versteifungskörper ausschließlich vermittels der Verbindungsmittel mit dem wenigstens einen Rahmenkörper, insbesondere mit den Rahmenkörpern, verbunden. Hierbei kann das Verbindungsmittel vermittels kraft- und/oder stoff- und/oder formschlüssiger Verbindung, insbesondere vermittels Schweißverbindung und/oder vermittels einer Schraubverbindung mit dem Rahmenkörper verbunden sein. Beispielsweise kann ein Versteifungskörper länglich ausgebildet sein und an dessen Endabschnitten jeweils über ein Verbindungsmittel mit Rahmenkörpern, insbesondere unmittelbar, verbunden sein. Mit anderen Worten ist ein erster Endabschnitt des Verbindungsmittels mit einem ersten Rahmenkörper und ein weiterer Endabschnitt des Verbindungsmittels mit einem weiteren Rahmenkörper, insbesondere unmittelbar, verbunden.

Zumindest ein Rahmenkörper kann beispielsweise eine Aufnahmekammer ausbilden und zumindest ein Eingriffsabschnitt wenigstens eines Verbindungsmittels im Endmontagezustand in einen Bereich der Aufnahmekammer eingreifen. Wandungsabschnitte des Rahmenkörpers können hierbei die Aufnahmekammer zumindest abschnittsweise umgeben, um wenigstens zwei Seiten, bevorzugt um wenigstens drei Seiten, der Aufnahmekammer zu definieren. Die Aufnahmekammer kann beispielsweise zumindest abschnittsweise, bevorzugt überwiegend, besonders bevorzugt vollständig, innerhalb eines Haupterstreckungsvolumens des Rahmenkörpers angeordnet oder ausgebildet sein. D. h. z. B., dass die Aufnahmekammer innerhalb der im Querschnitt des Rahmenkörpers sich aufspannende maximale Flächenerstreckung liegt. Die Aufnahmekammer kann beispielsweise durch einen Umformprozess, insbesondere durch einen Umbiegeprozess, des aus einem Blechteil geformten Rahmenkörpers ausgebildet sein. Die wenigstens eine Aufnahmekammer kann beispielsweise durch einen Umbiegeprozess aufgrund eines zumindest abschnittsweise U- oder S- förmigen Umbugs eines Blechteils ausgebildet werden.

Zumindest ein Rahmenkörper kann beispielsweise wenigstens zwei, zumindest abschnittsweise geradlinig verlaufende Aufnahmekammern ausbilden, wobei im Endmontagezustand ein erster Eingriffsabschnitt eines Verbindungsmittels in einen Bereich einer ersten Aufnahmekammer eines Rahmenkörpers und ein zweiter Eingriffsabschnitt desselben Verbindungsmittels in einen Bereich einer zweiten Aufnahmekammer desselben Rahmenkörpers eingreift. Folglich kann das Eingreifen des Verbindungsmittels sich über wenigstens zwei, insbesondere getrennt vorliegende, Aufnahmekammern desselben Rahmenkörpers erstrecken.

Wenigstens ein Bereich einer Aufnahmekammer eines Rahmenkörpers kann beispielsweise durch ein Abdeckelement abgedeckt sein. Bevorzugt wird der Bereich der Aufnahmekammer durch das Abdeckelement zu der Seite des Rahmenkörpers hin abgedeckt, von welcher der Eingriffsabschnitt des Verbindungsmittels in die Aufnahmekammer eingreift. Das Abdeckelement kann als von dem Rahmenkörper separat vorliegender, insbesondere flächiger, Körper vorliegen, z. B. als Blechteil. Das Abdeckelement kann beispielsweise eine Versteifungsmaßnahme aufweisen, z. B. mit wenigstens einer Versteifungssicken versehen sein. Zwei benachbart angeordnete Abdeckelemente können beispielsweise zwischen sich ein Verbindungsmittel aufnehmen. Hierbei kann beispielsweise ein Verbindungsmittel an seinem Randbereich zumindest abschnittsweise von dem Abdeckelement zum Innenraum hin abschnittsweise abgedeckt werden. Mit anderen Worten kann ein Abdeckelement, insbesondere zwei angrenzende Abdeckelemente, ein Verbindungsmittel überlappen. Es ist möglich, dass wenigstens ein Abdeckelement, insbesondere sämtliche an einem Verbindungsmittel anliegende Abdeckelemente, bevor unmittelbar, mit dem Verbindungskörper und/oder dem Rahmenkörper verbunden sind. Das Abdeckelement kann kraft- oder stoff- oder formschlüssig mit dem Verbindungsmittel und/oder mit dem Rahmenkörper verbunden sein, insbesondere kann wenigstens eine Schweißverbindung vorliegen. Bevorzugt kann das Abdeckelement sich über mehrere Aufnahmekammern desselben Rahmenkörpers erstrecken und diese zumindest abschnittsweise abdecken.

Zumindest ein Rahmenkörper kann beispielsweise wenigstens einen Hohlraum definieren, wobei Wandungsabschnitte des Rahmenkörpers den Hohlraum zu dem Innenraum des Gehäuserahmens und/oder zu einer Aufnahmekammer des Rahmenkörpers und/oder zu einer Außenseite des Gehäuserahmens begrenzen. Begrenzung meint hierbei, dass der Hohlraum durch die Wandungsabschnitte definiert wird, d. h. die Trennung des Hohlraums durch die Wandungsabschnitte des Rahmenkörpers trennt den Hohlraum gegenüber dem Innenraum des Gehäuserahmens und/oder gegenüber einer Aufnahmekammer und/oder gegenüber einer Außenseite des Gehäuserahmens zumindest abschnittsweise. Bevorzugt kann diese Trennung zumindest überwiegend, besonders bevorzugt zu mindestens 80 % der Grenzfläche, höchst bevorzugt zu mindestens 90 % der Grenzfläche, weiter bevorzugt vollständig, erfolgen. Mit anderen Worten können die Wandungsabschnitte Durchbrüche aufweisen, sodass Öffnungen bzw. Übertrittsmöglichkeiten zwischen dem Hohlraum und dem Innenraum und/oder der Aufnahmekammer und/oder der Außenseite vorliegen, wobei trotz der den Hohlraum mit benachbarten Bereichen verbindenden Durchbrüche der Hohlraum durch die Wandungsabschnitte des Rahmenkörpers begrenzt wird.

Es ist möglich, dass in dem Hohlraum des Rahmenkörpers und/oder in der Aufnahmekammer des Rahmenkörpers im Endmontagezustand ein, insbesondere als Gussmaterial und/oder als Pulvermaterial in den Hohlraum und/oder in die Aufnahmekammer des Rahmenkörpers eingebrachtes, Isolationsmaterial aufgenommen ist. Das Isolationsmaterial kann beispielsweise durch einen Durchbruch in der den Hohlraum und/oder die Aufnahmekammer definierenden Wandungsabschnitt des Rahmenkörpers eingebracht werden. Auch kann der Rahmenkörper wenigstens einen mehrere in einer Flucht, insbesondere koaxial, ausgerichtete Durchbrüche umfassenden Durchgangskanal aufweisen. Dieser Durchgangskanal kann beispielsweise zur Aufnahme eines stabförmigen Verbindungselements, insbesondere einer Gewindestange, verwendet werden, wobei vor dem Einbringen des Verbindungselements das Isolationsmaterial vermittels des Durchgangskanals in den wenigstens einen Hohlraum und/oder die wenigstens eine Aufnahmekammer eingebracht werden kann. Das stabförmige Verbindungselement kann beispielsweise zur Fixierung von aufeinander gestapelter Batteriegehäusemodule verwendet werden. Die Einbringung des Isolationsmaterials kann beispielsweise vermittels eines Applikators, z. B. einer Ausgabedüse, erfolgen, wobei der Applikator zumindest abschnittsweise zur Einbringung des Isolationsmaterials in den wenigstens einen Durchbruch, insbesondere in den Durchgangskanal, eingeführt werden kann. Ein in einen Durchbruch, insbesondere in einen Durchgangskanal, eingeführter Applikator kann während des das Isolationsmaterial ausgebenden Prozessschritts, insbesondere schrittweise, herausgefahren werden. Als Isolationsmaterial kann beispielsweise ein geschäumtes oder schäumendes Material, wie beispielsweise Polyurethan-Schaum, verwendet werden. Das in den Rahmenkörper eingebrachte Isolationsmaterial kann als thermische Isolierung wirken und damit einen integralen Bestandteil des Gehäuserahmens bilden. Das Isolationsmaterial kann als druckfester und/oder adhäsiver Schaum ausgebildet sein, welcher vorzugsweise die kompletten Hohlräume verbindet und gegeneinander abstützt. Durch das Isolationsmaterial kann eine thermische Isolierung und/oder eine Aussteifung des Rahmenkörpers und/oder Anforderungen bzgl. Brandschutz und/oder Explosionsschutz des Rahmenkörpers und damit des Batteriegehäusemoduls erfüllt werden. Die Formgebung für das Isolationsmaterial kann durch die Innenwandung des das Isolationsmaterial aufnehmenden Rahmenkörpers, ggf. unter Einwirkung eines Abdeckelements, erfolgen.

Das Verbindungsmittel kann beispielsweise kraft- und/oder form- und/oder stoffschlüssig mit dem Versteifungskörper verbunden sein, so kann das Verbindungsmittel beispielsweise vermittels einer Schraubverbindung mit dem Versteifungskörper verbunden sein. Der Versteifungskörper kann eine, insbesondere rechtwinklig zu Haupterstreckungsachse des Versteifungskörpers verlaufende, Flanschplatte aufweisen, welche zur unmittelbaren Verbindung mit dem Verbindungsmittel dient. Diese unmittelbare Verbindung kann beispielsweise durch ein Schraubmittel erfolgen, wobei zwischen der Flanschplatte und dem Verbindungskörper wenigstens ein Wandabschnitt des Versteifungskörpers angeordnet sein kann, wobei das Schraubmittel oder ein Gegenelement zur Aufnahme des Schraubmittels zumindest abschnittsweise eine Öffnung des Wandabschnitts durchgreift. In einer alternativen Ausführungsform der Verbindung von Versteifungskörper und Verbindungsmittel kann ein Hülsenkörper als Zentrier- bzw. Ausrichtmittel verwendet werden, um eine exakte Ausrichtung dieser Elemente zu ermöglichen.

Neben dem Batteriegehäusemodul und einer Batteriegehäusemodulanordnung betrifft die Erfindung ein Verfahren zur Herstellung eines hierin beschriebenen Batteriegehäusemoduls. In einem ersten Verfahrensschritt (a) wird ein zumindest einen profilförmigen Rahmenkörper aufweisender Gehäuserahmen bereitgestellt. Der profilförmige Rahmenkörper kann hierbei im Vorfeld in einem Umformverfahren hergestellt worden sein. In einem nachfolgenden Verfahrensschritt (b) erfolgt ein Verbinden wenigstens eines in einem Innenraum des Gehäuserahmens angeordneten Versteifungskörpers mit einem Verbindungsmittel über eine erste Verbindungsschnittstelle des Versteifungskörpers und ein Verbinden des Verbindungsmittels über eine weitere Verbindungsschnittstelle mit einer das Batteriegehäusemodul tragenden Tragstruktur eines Fahrzeugs. Vorzugsweise wird das Batteriegehäusemodul als eine wenigstens eine Batterieeinheit enthaltende Baugruppe vormontiert, insbesondere werden wenigstens zwei jeweils eine Batterieeinheit enthaltende Batteriegehäusemodule als Vormontagebaugruppe an den der das Batteriegehäusemodul bzw. die Batteriegehäusemodule tragende Fahrzeugstruktur verbunden. Hierbei kann vermittels der Verbindungsmittel der jeweiligen Batteriegehäusemodule wenigstens eine, insbesondere für jedes Batteriegehäusemodul jeweils eine, kraftübertragende Struktur für die Baugruppe mit der Fahrzeugstruktur eingegangen werden.

In einer bevorzugten Ausführungsform des Verfahrens kann in den Gehäuserahmen zuerst der wenigstens eine Versteifungskörper montiert werden. Danach können die Batterieeinheiten bzw. das Batteriepaket in den Innenraum eingeführt und fixiert werden, bevorzugt erfolgt eine Fixierung der Batterieeinheiten, insbesondere ausschließlich, an den Versteifungskörpern bzw. werden, insbesondere ausschließlich, von diesen getragen. Danach kann, insbesondere nach einem Umdrehen der Baugruppe, eine Wärmeleitmittel und/oder ein Spaltenfüllmaterial, z. B. eine Wärmleitpaste und/oder eine Wärmeleitfolie auf einer Oberfläche der Batterieeinheit aufgebracht werden. Danach wird auf die mit dem Wärmeleitmittel und/oder mit dem Spaltenfüllmaterial versehene Seite bzw. Fläche der Batterieeinheit eine, insbesondere durch ein Kühlmedium durchströmbare, Kühleinrichtung, bevorzugt eine Kühlplatte montiert bzw. in deren unmittelbaren Nähe angeordnet. Die Fixierung der Kühleinrichtung, insbesondere der Kühlplatte, kann dabei, insbesondere ausschließlich, über die Versteifungskörper erfolgen. D. h. z. B., dass die Kühleinrichtung, insbesondere die Kühlplatte, ausschließlich über die Versteifungskörper an den Verbindungsmitteln und insbesondere schließlich an der Fahrzeugstruktur befestigt ist. Hierbei wird bewusst auf einen direkte bzw. unmittelbare, bevorzugt tragende, Befestigung der Kühleinrichtung, insbesondere der Kühlplatte, mit der Batterieeinheit und/oder mit dem Rahmenkörper zumindest weitgehend, insbesondere vollständig, verzichtet. Die relative Lagerfixierung zwischen Kühleinrichtung, insbesondere Kühlplatte, und der wenigstens einen Batterieeinheit erfolgt hierbei vermittels der Versteifungskörper. Die relative Lagefixierung zwischen Kühleinrichtung, insbesondere Kühlplatte und Rahmenkörper kann beispielsweise über die Versteifungskörper und die Verbindungsmittel erfolgen. Die Kühleinrichtung kann beispielsweise als Plattenwärmetauscher ausgebildet sein, insbesondere kann ein Kühlmedium die Kühleinrichtung durchströmen.

Nach oder vor einem Fixieren der Kühleinrichtung, insbesondere der Kühlplatte kann ein, insbesondere flächiges Isoliermittel, z. B. eine Isoliermatte, auf der Kühlplatte angeordnet werden.

Optional kann es vorgesehen sein, dass das Batteriegehäusemodul eine, insbesondere plattenartig ausgebildete, Versteifungseinrichtung umfasst, wobei die Versteifungseinrichtung, bevorzugt überwiegend, besonders bevorzugt ausschließlich, an der wenigstens einen Batterieeinheit und/oder an dem wenigstens einen Versteifungskörper und/oder an dem wenigstens einen Verbindungsmittel befestigt ist. Beispielsweise ist die Versteifungseinrichtung nahezu ausschließlich oder ausschließlich unmittelbar mit den Versteifungskörpern verbunden. D. h. die Tragfunktion der Versteifungseinrichtung und/oder die im Crashfall dort wirkenden Kräfte werden, insbesondere ausschließlich oder nahezu ausschließlich, über die Versteifungskörper erfüllt bzw. abgeleitet. Die Versteifungseinrichtung kann beispielsweise als Zugband oder als Zug- und Druckkräfte übertragende Strebe ausgebildet sein. Das wenigstens eine, insbesondere eine geradlinige Form aufweisende, Zugband und/oder die wenigstens eine, insbesondere eine geradlinige Form aufweisende, Strebe kann in einem Winkel von 25 bis 155°, bevorzugt in einem Winkel von 35 bis 145°, besonders bevorzugt in einem Winkel 45 bis 135°, besonders bevorzugt in einem Winkel von 80° bis 100°, zu der Längsachse eines Versteifungsmittels, insbesondere zu sämtlichen Versteifungsmitteln des Batteriegehäusemoduls ausgerichtet sein. Eine Versteifungseinrichtung kann beispielsweise an zwei unterschiedlichen Versteifungskörpern bzw. sich von einem ersten zu einem zweiten Versteifungskörper erstrecken. Die Montage der Versteifungseinrichtung kann bevorzugt nach einer Anordnung, insbesondere Fixierung, der Kühleinrichtung, insbesondere der Kühlplatte, und/oder nach der Anordnung, insbesondere Fixierung, des Isoliermittels erfolgen.

Ferner betrifft die Erfindung auch ein Kraftfahrzeug, insbesondere ein Nutzfahrzeug, das elektromotorisch antreibbar ist und wenigstens ein hierin beschriebenes Batteriegehäusemodul, bevorzugt wenigstens zwei übereinander gestapelte hierin beschriebene Batteriegehäusemodule, umfasst. Das Nutzfahrzeug kann beispielsweise ein Omnibus, ein Lastkraftwagen, eine Zugmaschine oder ein Kranwagen sein.

Ein einzelnes Batteriegehäusemodul oder ein Stapel aus wenigstens zwei Batteriegehäusemodulen kann beispielsweise einseitig an einer Tragstruktur des Fahrzeugs, insbesondere an einem Chassis gehalten sein. Beispielsweise umfasst das Fahrzeug einen Rahmenkörper, insbesondere einen Rahmenkörper nach Art eines Leiterrahmens mit wenigstens zwei Längsträgern. Das einzelne Batteriegehäusemodul oder ein Stapel aus wenigstens zwei Batteriegehäusemodulen kann an einem seitlich zu einem Längsträger verlaufenden Seitenbereich des Rahmenkörpers und damit des Fahrzeugs und/oder in einem zwischen zwei Längsträgern gebildeten Zwischenbereich angeordnet sein. Auch ist es möglich an einem ersten Seitenbereich, d. h. an einem nach außen weisenden Bereich eines ersten Längsträgers wenigstens ein erstes Batteriegehäusemodul und an einem weiteren, an der dem ersten Seitenbereich abgewandten Seite des zweiten Längsträgers gelegenen Seitenbereich wenigstens ein zweites Batteriegehäusemodul anzuordnen. Alternativ oder zusätzlich kann zwischen den beiden Längsträgern wenigstens ein Batteriegehäusemodul aufgenommen sein.

Es ist möglich, die wenigstens zwei an den unterschiedlichen Seitenbereichen angeordneten Batteriegehäusemodule über eine Abstützstruktur miteinander zu verbinden.

Sämtliche Vorteile, Einzelheiten, Ausführungen und/oder Merkmale des erfindungsgemäßen Batteriegehäusemoduls sind auf die erfindungsgemäße Batteriegehäusemodulanordnung sowie auf das erfindungsgemäße Verfahren und auf das erfindungsgemäße Kraftfahrzeug übertragbar bzw. anzuwenden und umgekehrt.

Die Erfindung ist anhand von Ausführungsbeispielen in den Zeichnungen näher erläutert. Dabei zeigt:
Fig. 1 eine perspektivische Prinzipdarstellung eines Batteriegehäusemoduls gemäß einem Ausführungsbeispiel;
Fig. 2 eine perspektivische Schnittdarstellung eines Details gemäß Detail A aus Figur 1;
Fig. 3 eine perspektivische Schnittdarstellung des Rahmenkörpers gemäß einem Ausführungsbeispiel;
Fig. 4 eine perspektivische Prinzipdarstellung eines Batteriegehäusemoduls gemäß einem Ausführungsbeispiel;
Fig. 5 eine schematische Schnittdarstellung eines Details B aus Figur 4;
Fig. 6 eine perspektivische Prinzipdarstellung eines Versteifungskörpers gemäß einem Ausführungsbeispiel;
Fig. 7 eine perspektivische Prinzipdarstellung eines außenseitig in einen Rahmenkörper eingesetzten Verbindungsmittels gemäß einem Ausführungsbeispiel;
Fig. 8 eine schematische Schnittdarstellung gemäß Schnittebene X aus Figur 7;
Fig. 9 eine schematische Schnittdarstellung gemäß Schnittebene Z aus Figur 7;
Fig. 10 eine perspektivische Prinzipdarstellung eines Teils eines Gehäuserahmen in einer Hybridbauweise;
Fig. 11 eine perspektivische Prinzipdarstellung einen Deckelkörper und vier Batteriegehäusemodule umfassenden Gehäuseanordnung gemäß einem Ausführungsbeispiel;
Fig. 12 eine perspektivische Prinzipdarstellung gemäß Schnittebene Z1 aus Figur 11;
Fig. 13 eine perspektivische Prinzipdarstellung gemäß Schnittebene Z2 aus Figur 12;
Fig. 14 eine schematische Darstellung von Batteriegehäusemodulanordnungen an einer Tragstruktur eines Kraftfahrzeugs gemäß einem Ausführungsbeispiel;
Fig. 15 eine schematische Darstellung eines Verfahrens zur Herstellung eines Batteriegehäusemoduls;
Fig. 16 eine schematische Darstellung eines Verfahrens zur Herstellung einer Batteriegehäusemodulanordnung.

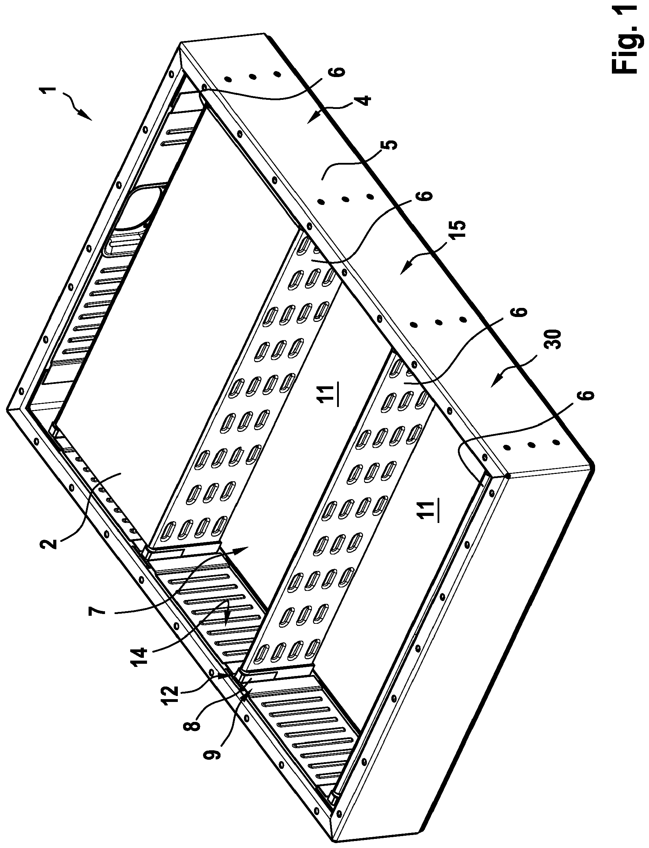

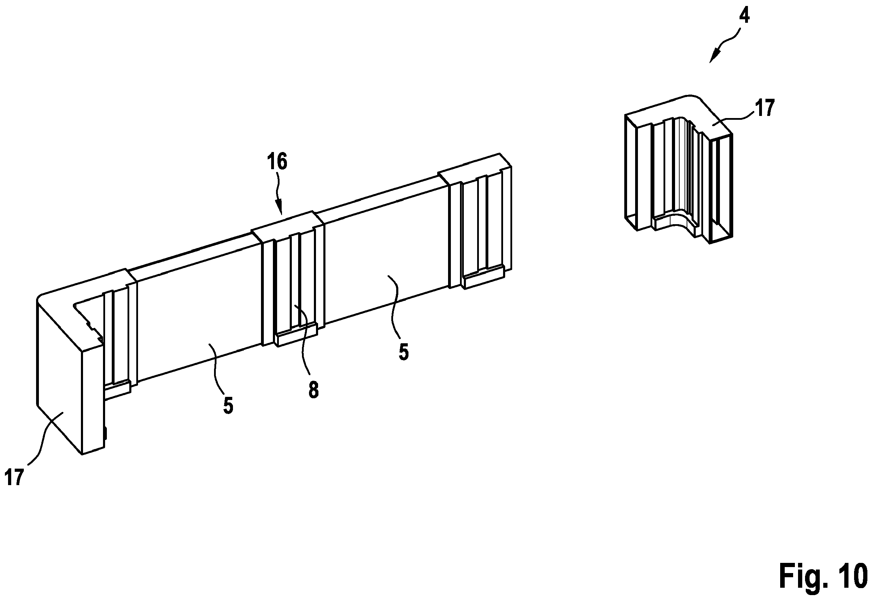

In den Figuren 1 bis 6, den Figuren 6 bis 9 sowie in der Figur 10 ist der Grundgedanke der Erfindung beispielhaft in unterschiedlichen Ausführungsformen beschrieben. Gleichartige bzw. gleichwirkende Bauteile der unterschiedlichen Ausführungsformen sind mit gleichen Bezugszeichen versehen.

Figur 1 zeigt ein Batteriegehäusemodul 1, 1' zur Aufnahme zumindest einer Batterieeinheit 2, insbesondere einer Batterieeinheit 2 einer Traktionsbatterie, eines elektromotorisch antreibbaren Fahrzeugs 3. Das Batteriegehäusemodul 1, 1' umfasst dabei wenigstens einen Gehäuserahmen 4, welcher einen Innenraum 7 zur Aufnahme zumindest einer Batterieeinheit 2 definiert, wobei der Gehäuserahmen 4 zumindest einen, insbesondere profilförmigen, Rahmenkörper 5 umfasst. In dem Innenraum 7 ist wenigstens ein Versteifungskörper 6, vorliegend beispielhaft vier Versteifungskörper 6, angeordnet, wobei die Versteifungskörper 6 den Innenraum 7 in separate Bereiche 11 unterteilen. Über Verbindungsmittel 8, welche jeweils eine Verbindungsschnittstelle 9 zum Verbinden mit dem Versteifungskörper 6 aufweisen, wird eine kraftübertragende Struktur 12 des Batteriegehäusemoduls 1, 1' ausgebildet, wobei die kraftübertragende Struktur 12 des Batteriegehäusemoduls 1, 1' eingerichtet ist, Kräfte auf eine das Batteriegehäusemodul 1, 1' tragende Fahrzeugstruktur 13 zu übertragen.

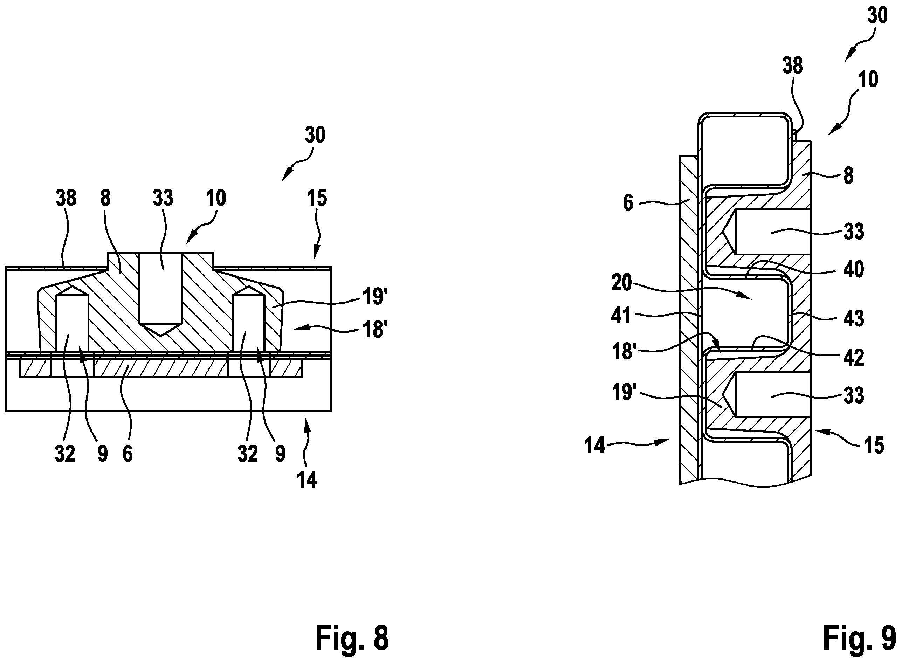

Das Verbindungsmittel 8 kann beispielsweise eine erste Verbindungsschnittstelle 9 zum Verbinden mit dem Versteifungskörper 6 und eine weitere Verbindungsschnittstelle 10 zum Verbinden mit einer das Batteriegehäusemodul 1, 1' tragenden Fahrzeugstruktur 13 umfassen. Beispielsweise kann das Verbindungsmittel 8 über die erste Verbindungsschnittstelle 9, insbesondere unmittelbar, über ein Fixierelement (z. B. eine Schraube und/oder einen Stift und/oder einen Niet) eine Verbindung, insbesondere unmittelbar, mit dem Versteifungskörper 6 ausbilden. Alternativ oder zusätzlich kann das Verbindungsmittel 8 über die zweite Verbindungsschnittstelle 10, insbesondere unmittelbar, über ein Fixierelement (z. B. eine Schraube und/oder einen Stift und/oder einen Niet) eine Verbindung, insbesondere unmittelbar, mit der das Batteriegehäusemodul 1, 1' tragenden Fahrzeugstruktur 13 ausbilden. Mit anderen Worten kann damit eine durch unmittelbare Kraftübertragung von Fahrzeugstruktur 13 über Verbindungsmittel 8 auf die Versteifungskörper 6 vermittels der Fixierelemente (z. B. Schrauben) erreicht werden, sodass beispielsweise der Rahmenkörper 5 und/oder die Gehäusewand 38 keine oder keine wesentliche kraftübertragende Funktion für die Befestigung des Batteriegehäusemoduls 1, 1' an der Fahrzeugstruktur 13 innehat. Bevorzugt ist wenigstens eine Verbindungsschnittstelle 9, 10, besonders bevorzugt sind die erste und die zweite Verbindungsschnittstelle 9, 10, als Schnittstellen einer Schraubverbindung ausgebildet. Das in den Figuren 8 und 9 gezeigte Verbindungsmittel 8 ist als einstückiger Körper ausgebildet und weist als Verbindungsschnittstellen 9, 10 jeweils mit einem Innengewinde versehene Aufnahmeabschnitte 32, 33 auf. Beispielhaft verläuft die Längsachse der, beispielsweise als mit einem Innengewinde versehen ausgebildeten, Aufnahmeabschnitte 32, 33 parallel zur Haupterstreckungsachse 48 des Versteifungskörpers 6. Der zur Außenseite 30 hin offene Aufnahmeabschnitt 33 dient zur Befestigung mit der Fahrzeugstruktur 13, beispielsweise wird die Fahrzeugstruktur 13 vermittels einer in den Aufnahmeabschnitt 33 aufgenommenen Schraube (nicht dargestellt) mit dem Batteriegehäusemodul 1, 1' verbunden. Der erste Aufnahmeabschnitt 32 bildet die Verbindungsschnittstelle 9 und dient zur Fixierung eines im Innenraum 7 angeordneten Versteifungskörpers 6, hierzu kann in dem zum Innenraum 7 hin offenen, und insbesondere mit einem Innengewinde versehenen, Aufnahmeabschnitt 32 ein Befestigungselement, z. B. eine Schraube, aufgenommen werden. Abweichend hiervon kann wenigstens eine Verbindungsschnittstelle 9, 10, insbesondere die dem Versteifungskörper 6 zugeordnete Verbindungsschnittstelle 9, als Gewindebolzen oder als sonstige Steck- und/oder Klemmverbindung ausgebildet sein.

In Figur 1 ist beispielhaft eine Batterieeinheit 2 in einem Bereich zwischen zwei Versteifungskörpern 6 dargestellt. Es ist möglich, dass wenigstens eine Batterieeinheit 2, insbesondere eine Gruppe von Batterieeinheiten 2 über, zumindest zwei, insbesondere ausschließlich zwei, von der Batterieeinheit 2 bzw. den Batterieeinheiten 2 benachbarten Versteifungskörpern 6 getragen wird. Beispielsweise sind sämtliche Batterieeinheiten 2 ausschließlich über Versteifungskörper 6 mit dem Gehäuserahmen 4 verbunden, hierbei können die Batterieeinheiten 2 ausschließlich an den Versteifungskörpern 6, die Versteifungskörper 6 an den Verbindungsmitteln 8 und die Verbindungsmittel 8 mit dem Gehäuserahmen 4 und/oder einer das Batteriegehäusemodul 1, 1' tragenden Fahrzeugstruktur 13 verbunden sein. Die Batterieeinheit 2 kann hierzu beispielsweise eine formschlüssige Verbindung mit den Versteifungskörpern 6 eingehen, beispielsweise ist die die wenigstens eine Batterieeinheit 2 in einem zwischen zwei Versteifungskörpern 6 gebildeten Bereich eingesetzt, insbesondere eingehängt, und mit dem Versteifungskörper 6 fixiert. Dadurch, dass jede Batterieeinheit 2 des Batteriegehäusemoduls 1, 1' jeweils über an gegenüberliegenden Seiten der Batterieeinheit 2 angeordnete Versteifungskörper 1, 1' angeordnet ist, können benachbarte und durch einen Versteifungskörper 6 getrennte Batterieeinheiten 2 auf denselben Versteifungskörper 6 als Tragstruktur zurückgreifen bzw. an demselben Versteifungskörper 6 befestigt sein.

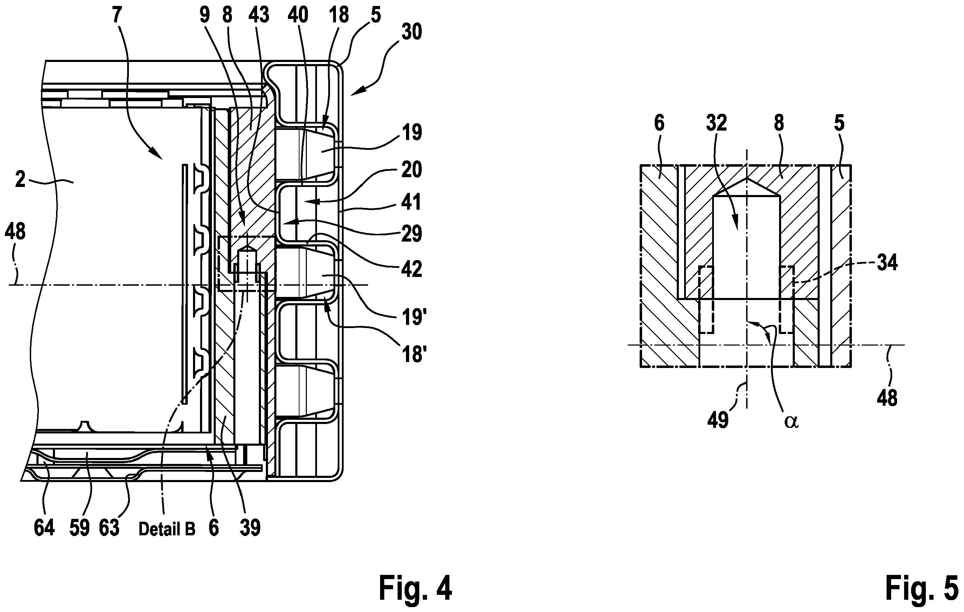

Die Vielzahl der Batterieeinheiten 2 können innerhalb des Batteriegehäusemoduls 1, 1' zeilenweise angeordnet sein, wobei jede Zeile zu einer benachbarten Zeile durch wenigstens einen, insbesondere durch ausschließlich, einen Versteifungskörper 6 getrennt ist. Die erste und die letzte Zeile dieser zeilenartigen Anordnung (also jene Zeilen, welche nur eine benachbarte Zeile aufweisen) weist auch zwei Versteifungskörper 6 auf, wobei der von der benachbarten Zeile abgewandte angeordnete Versteifungskörper 6 parallel zu einem geradlinigen Rahmenkörper 5 verläuft und zu diesem einen Freiraum ausbildet, in welchem keine Batterieeinheit 2 angeordnet ist. Wie aus Figur 4 ersichtlich, kann unterhalb der Batterieeinheit eine Kühleinrichtung 59 angeordnet sein. Auch kann unterhalb der Batterieeinheit, insbesondere zwischen der Batterieeinheit und der Kühleinrichtung 59 ein Wärmeleitmittel (nicht dargestellt), z. B. eine Wärmleitpaste und/oder eine Wärmeleitfolie, angeordnet sein. Die Kühleinrichtung 59 kann beispielsweise eine Kühlplatte umfassen oder als solche ausgebildet sein. Die Fixierung der Kühleinrichtung 59, insbesondere der als Kühlplatte ausgebildeten Kühleinrichtung 59, kann dabei, insbesondere ausschließlich (mit Ausnahme von Zu- und Ableitungen für ein Kühlmedium, welche primär keine tragende bzw. haltende Funktion innehaben), über die Versteifungskörper erfolgen. D. h. z. B., dass die Kühleinrichtung 59, insbesondere die Kühlplatte der Kühleinrichtung 59, ausschließlich über die Versteifungskörper 6 an den Verbindungsmitteln 8 und damit an der Fahrzeugstruktur 13 befestigbar oder befestigt ist. Hierbei wird bewusst auf einen direkte bzw. unmittelbare, bevorzugt tragende, Befestigung der Kühleinrichtung 59, insbesondere der Kühlplatte, mit der Batterieeinheit 2 und/oder mit dem Rahmenkörper 5 zumindest weitgehend, insbesondere vollständig, verzichtet. Die relative Lagerfixierung zwischen Kühleinrichtung 59 und der wenigstens einen Batterieeinheit 2 erfolgt hierbei vermittels der Versteifungskörper 6. Die relative Lagefixierung zwischen Kühleinrichtung 59, insbesondere Kühlplatte, und Rahmenkörper 5 kann beispielsweise über die Versteifungskörper 6 und die Verbindungsmittel 8 erfolgen. Alternativ kann die Kühleinrichtung 59, insbesondere ausschließlich, über die Verbindungsmittel 8 mit den Versteifungskörpern 6 und dem Rahmenkörper 2 verbunden sein. Die Kühleinrichtung 59 kann beispielsweise als Plattenwärmetauscher ausgebildet sein, insbesondere kann ein Kühlmedium die Kühleinrichtung 59 durchströmen.

Optional kann es vorgesehen sein, dass das Batteriegehäusemodul 1 eine, insbesondere plattenartig ausgebildete, Versteifungseinrichtung 63 umfasst, wobei die Versteifungseinrichtung 63, bevorzugt überwiegend, besonders bevorzugt ausschließlich, an der wenigstens einen Batterieeinheit 2 und/oder an dem wenigstens einen Versteifungskörper 6 und/oder an dem wenigstens einen Verbindungsmittel 8 und/oder an der Kühleinrichtung 59 befestigt ist. Beispielsweise kann die Versteifungseinrichtung 63 ausschließlich unmittelbar mit den Versteifungskörpern 6 verbunden sein, wobei hierzu eingesetzte Verbindungshilfsmittel 64 die Kühlreinrichtung 59 und/oder ein Wärmeleitmittel durchgreifen können. D. h. die Tragfunktion der Versteifungseinrichtung und/oder die an diesem Ort im Crashfall wirkenden Kräfte werden, insbesondere ausschließlich oder nahezu ausschließlich, über die Versteifungskörper erfüllt bzw. abgeleitet.

Die Versteifungseinrichtung 63 kann beispielsweise - wie dargestellt - als plattenartiger, insbesondere mit Versteifungssicken versehener, Körper ausgebildet sein, der insbesondere parallel zu der Haupterstreckungsebene des Batteriegehäusemoduls ausgerichtet ist. Alternativ oder zusätzlich kann die Versteifungseinrichtung 63 zumindest abschnittsweise als Zugband oder als Zug- und Druckkräfte übertragende Strebe ausgebildet sein (nicht dargestellt).

In der in den Figuren 4 und 5 gezeigten Ausführungsform ist ein mit einem Innengewinde versehener Aufnahmeabschnitt 32 des Verbindungsmittels 8 senkrecht zur Haupterstreckungsebene 21, 22 des Batteriegehäusemoduls 1, 1' ausgerichtet. Alternativ oder zusätzlich kann, beispielsweise optional, (schematisch mit Strichlinie in Figur 5 dargestellt) ein Hülsenkörper 34 den Versteifungskörper 6 und das Verbindungsmittel 8 verbinden. Alternativ oder zusätzlich kann zu einem Hülsenkörper 34 im Kontaktbereich von Versteifungskörper 6 und Verbindungsmittel 8 eine gestiftete Verbindung (nicht dargestellt) zusätzlich oder alternativ zur Schraubverbindung vorliegen.

Der Hülsenkörper 34 oder ein Stift einer Stiftverbindung kann bevorzugt parallel zu einer Hauptfügerichtung eines Schraubmittels ausgerichtet sein. Die Fügerichtung oder Längsachse des Schraubmittels zum Verschrauben von Verbindungsmittel 8 und Versteifungskörper 6 kann beispielsweise eine nicht parallele Ausrichtung zu der Haupterstreckungsachse 48 des Versteifungskörpers 6 aufweisen, bevorzugt kann ein Winkel α zwischen der Fügerichtung bzw. Längsachse 49 des Schraubmittels und der Haupterstreckungsachse 48 des Versteifungskörpers 6 im Bereich von 45° bis 135°, bevorzugt von 65° bis 115°, besonders bevorzugt von 80° bis 100°, höchst bevorzugt 90°, betragen.

Das Verbindungsmittel 8 und der Versteifungskörper 6 können beispielsweise einen Kontaktbereich 27 aufweisen, an welchem der Versteifungskörper 8 bei einer horizontalen Ausrichtung des Gehäuserahmens 4, d. h., dass der Gehäuserahmen 4 mit seiner Haupterstreckungsebene horizontal ausgerichtet ist, schwerkraftbedingt formschlüssig an den Verbindungsmitteln 8 ansetzbar ist. In diesem formschlüssig aufgrund der Schwerkraft gehaltenen, insbesondere statisch ruhenden, Zustand kann eine weitergehende Fixierung, bevorzugt das Setzen einer Schraubverbindung, von Versteifungskörper 6 und Verbindungskörper 8 auf einfache Weise erfolgen.

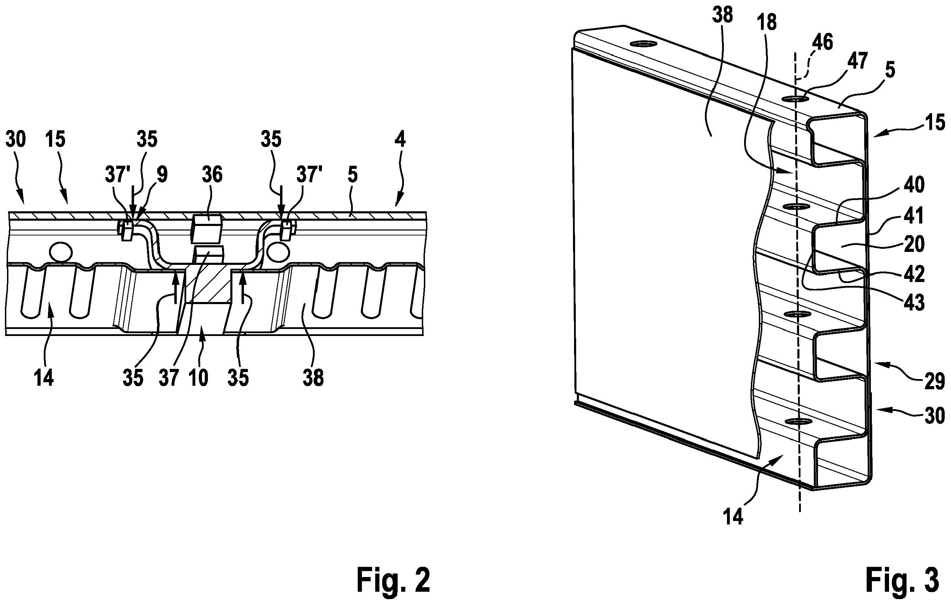

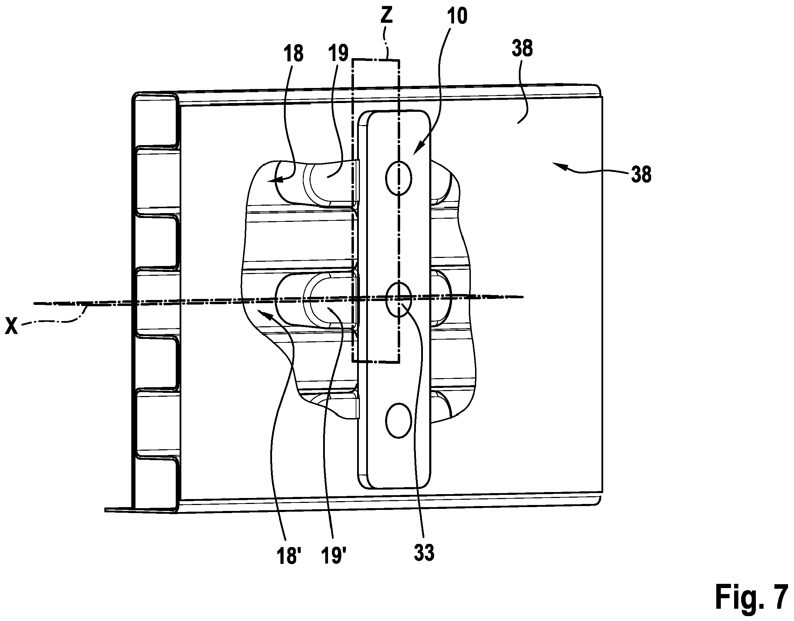

Das wenigstens eine Verbindungsmittel 8 kann beispielsweise an einer dem Innenraum 7 zugewandten Seite 14 des Rahmenkörpers 5 angeordnet sein, vgl. Figuren 1 und 2. Alternativ oder zusätzlich kann wenigstens ein Verbindungsmittel 8, insbesondere sämtliche Verbindungsmittel 8, an einer dem Innenraum 7 abgewandten Seite 15 des Rahmenkörpers 5 angeordnet sein, vgl. Figur 7.

In der in Figur 10 dargestellten Ausführungsform wird der Gehäuserahmen 4 zumindest abschnittsweise durch wenigstens zwei, zwischen sich einen Zwischenraum 16 aufweisende Rahmenkörper 5 gebildet, wobei zumindest abschnittsweise in dem Zwischenraum 16 ein, insbesondere die Rahmenkörper 5 miteinander verbindendes, Verbindungsmittel 8 angeordnet ist. Der Gehäuserahmen 4 kann beispielsweise die Form eines geschlossenen Rings (nicht dargestellt) aufweisen, wobei einzelne Abschnitte dieses geschlossenen Rings durch das Verbindungsmittel 8 und weitere Abschnitte des geschlossenen Rings durch den Rahmenkörper 5 gebildet sind. Dabei können die Rahmenkörper 5 an mechanisch weniger belasteten Bereichen des Gehäuserahmens 4 angeordnet sein, wohingegen das oder die Verbindungsmittel 8 an mechanisch höher belasteten Bereichen des geschlossenen Rings des Gehäuserahmens 4 angeordnet ist bzw. sind. Ein mechanisch höher belasteter Bereich kann hierbei insbesondere die Schnittstelle zu im Innenraum 7 angeordneten Versteifungskörpern 6 und/oder zu einer Anbindung an eine das Batteriegehäusemodul 1, 1' tragenden Fahrzeugstruktur 13 bilden.

Der Gehäuserahmen 4 kann beispielsweise rechteckig ausgebildet sein und/oder die Form eines Quaders aufweisen. Hierbei kann die Rechteckform bzw. die Quaderform nach Art eines geschlossenen Rings ausgebildet sein. Wenigstens ein zwei Rahmenkörper 5 oder wenigstens ein einen Rahmenkörper 5 mit einem Verbindungsmittel 8 verbindender Eckabschnitt des, insbesondere einen geschlossenen Ring ausbildenden, Gehäuserahmens 4 kann beispielsweise durch ein Eckelement 17 gebildet sein, wobei das Eckelement 17 in einem urformenden und/oder trennenden Fertigungsverfahren hergestellt ist. Das Eckelement 17 kann beispielsweise als Verbindungsmittel 8 ausgebildet sein und dabei zumindest eine, insbesondere unmittelbare, Verbindung mit dem Versteifungskörper 6 aufweisen. Ferner kann das Eckelement 17 optional eine direkte mechanische Verbindung mit einer Fahrzeugstruktur 13 aufweisen. Das Eckelement 17 kann beispielsweise zumindest abschnittsweise, bevorzugt überwiegend, besonders bevorzugt vollständig, in einem Gussverfahren und/oder in einem Fräsverfahren seine geometrische Zielform erhalten haben.

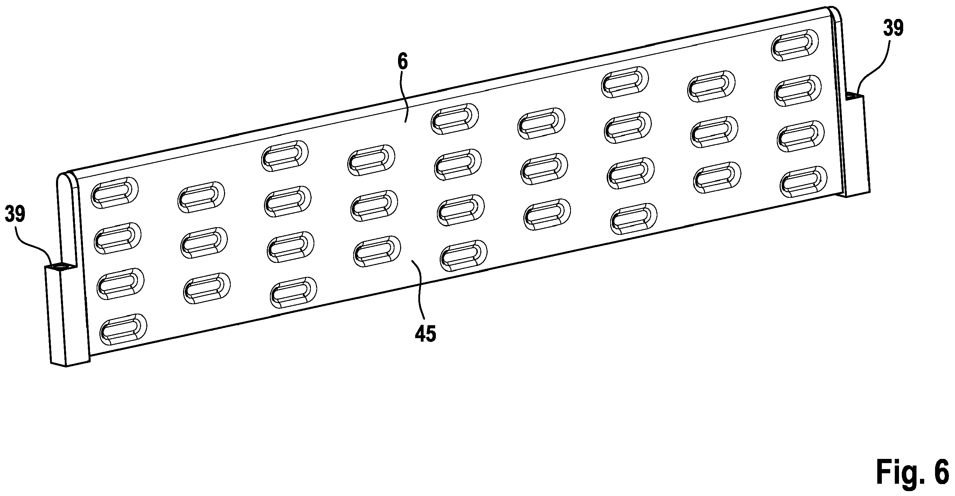

Der Rahmenkörper 5 und/oder der Versteifungskörper 6 kann beispielsweise aus einem Umformverfahren hergestellt sein, bevorzugt ist bzw. sind der Rahmenkörper 5 und/oder der Versteifungskörper 6 in einem Biegeumformverfahren, besonders bevorzugt in einem Profilierverfahren, hergestellt. Der Rahmenkörper 5 kann hierbei in einem Endlosverfahren als ein mehrere Umbiegungen aufweisender Profilkörper erzeugt werden und danach Abgelängt werden. Vor oder nach dem Ablängen kann der Rahmenkörper bzw. der Profilkörper beispielsweise in einem Material trennenden Verfahrensschritt Materialabschnitte herausgetrennt werden, beispielsweise können Öffnungen 47 (insbesondere für die Durchgangskanäle), beispielsweise vermittels Laser oder Stanzen, herausgetrennt werden. Nach dem Ablängen und/oder nach dem trennenden Verfahrensschritt kann das Umbiegen zum Erreichen der Gehäuserahmenform erfolgen oder ein Zusammensetzen mit Verbindungsmitteln 8 gemäß Figur 10. Der Versteifungskörper 6 kann zumindest abschnittsweise, bevorzugt überwiegend, besonders bevorzugt ausschließlich, als Umformteil, insbesondere als Blechumformteil, ausgebildet sein. Dabei kann der Versteifungskörper 6 nahezu gänzlich aus einem Umformprozess erzeugt sein und lediglich an seinen Endabschnitten ein schnittstellenbildendes Schnittstellenelement 39 umfassen, vgl. Figur 6. Als versteifungssteigernde Maßnahme kann der Versteifungskörper 6 beispielsweise eine Prägestruktur 45 umfassen, vgl. Figur 6.

Der wenigstens eine Versteifungskörper 6 kann beispielsweise ausschließlich über wenigstens ein Verbindungsmittel 8 mit dem wenigstens einen Rahmenkörper 5 verbunden sein, bevorzugt sind sämtliche Versteifungskörper 6 ausschließlich vermittels Verbindungsmittel 8 mit dem wenigstens einen, insbesondere mit sämtlichen, Rahmenkörper 5 verbunden. Hierzu kann das Verbindungsmittel 8 wenigstens eine Kontaktfläche aufweisen, insbesondere eine Vielzahl an Kontaktflächen, an welchen das Verbindungsmittel 8 stoffschlüssig, insbesondere vermittels eines Schweißverfahrens, mit dem Rahmenkörper 5 verbunden ist, vgl. Pfeile 35.

In der in Figur 2 gezeigten Ausführungsform wird über das am Rahmenkörper 5 angebrachte Innengewinde (vgl. schematischen Block 36) und eine Öffnung auf der zur Außenseite 30 zugewandten Wandung des Rahmenkörpers 5 eine Verbindung mit der Fahrzeugstruktur 13 hergestellt. Alternativ oder zusätzlich kann das Innengewinde (vgl. Block 37, 37') an dem Verbindungsmittel 8 angeordnet oder ausgebildet sein und damit eine weitere Verbindungsschnittstelle 10 zur direkten Fixierung mit einer Fahrzeugstruktur 13 ausbilden. Die zwei Blöcke 37' können alternativ oder zusätzlich zu dem Block 37 vorgesehen sein. Die in Figur 2 dargestellte Situation der schematischen Blöcke 36, 37, 37' kann sich entlang der Hochachse (Z-Achse) mindestens einmal, bevorzugt mindestens zweimal, wiederholen. Die schematischen Blöcke 36, 37, 37' können beispielsweise als an dem Rahmenkörper 5 bzw. an dem Verbindungsmittel 8 angeschweißte und ein Innengewinde umfassende Körper ausgebildet sein.

Zumindest ein Rahmenkörper 5 kann beispielsweise eine Aufnahmekammer 18, 18' ausbilden und zumindest ein Eingriffsabschnitt 19, 19' wenigstens eines Verbindungsmittels 8 kann im Endmontagezustand in einen Bereich der Aufnahmekammer 18, 18' eingreifen. Der die Aufnahmekammern 18, 18' ausbildende Rahmenkörper 5 und/oder das die Eingriffsabschnitte 19, 19' ausbildende Verbindungsmittel 8 kann eine kammartige Form aufweisen, bzw. die Eingriffsabschnitte 18, 18' können parallel zueinander ausgerichtete Finger ausbilden, welche insbesondere in korrespondierend angeordnete oder ausgebildete Aufnahmekammern 18, 18' eingreifen.

Auf der Seite, von welcher aus das Verbindungsmittel 8 an den Rahmenkörper 5 angesetzt wird, kann der übrige Bereich des Aufnahmekanals 18, 18' mit einem Abdeckelement 38 abgedeckt werden. In der in Figur 7 gezeigten Ausführungsform ist das Abdeckelement 38 an der Außenseite 30 des Rahmenkörpers 5, in der in Figur 2 gezeigten Ausführungsform ist das Abdeckelement 38 an der dem Innenraum 7 zugewandten Seite des Rahmenkörpers 5 angeordnet. Das Abdeckelement 38 kann beispielsweise an dem Verbindungskörper 6 und/oder an dem Rahmenkörper 5 kraft- und/oder form- und/oder stoffschlüssig verbunden sein, insbesondere ist das Abdeckelement 38 vermittels einer Schweißverbindung an dem Verbindungskörper 6 und/oder an dem Rahmenkörper 5 befestigt.

Zumindest ein Rahmenkörper 5 kann beispielsweise wenigstens zwei, zumindest abschnittsweise geradlinig verlaufende Aufnahmekammern 18, 18' ausbilden, wobei im Endmontagezustand ein erster Eingriffsabschnitt 19 eines Verbindungsmittels 8 in einen Bereich einer ersten Aufnahmekammer 18 eines Rahmenkörpers 5 und ein zweiter Eingriffsabschnitt 19' desselben Verbindungsmittels 8 in einen Bereich einer zweiten Aufnahmekammer 18' desselben Rahmenkörpers 5 eingreift. Die geradlinig verlaufenden Aufnahmekammern 18, 18' können parallel zu einer Gehäuserahmenseitenerstreckung verlaufen. Beispielsweise können die geradlinig verlaufenden Aufnahmekammern 18, 18' parallel zur Haupterstreckungsebene 21, 22 des Batteriegehäusemoduls 1, 1' ausgerichtet verlaufen.

Zumindest ein Rahmenkörper 5 kann beispielsweise wenigstens einen Hohlraum 20 definieren, wobei Wandungsabschnitte 29 des Rahmenkörpers 5 den Hohlraum 20 zu dem Innenraum 7 des Gehäuserahmens 4 und/oder zu einer Aufnahmekammer 18 des Rahmenkörpers 5 und/oder zu einer Außenseite 30 des Gehäuserahmens 4 begrenzen. Die Wandungsabschnitte 29 können hierbei eine (a) erste, einen Hohlraum 20 nach oben hin begrenzende Kanalwand 40, (b) eine zweite, den Hohlraum 20 zur Außenseite 30 hin begrenzende Kanalwand 41, (c) eine dritte, einen Hohlraum 20 nach unten hin begrenzende Kanalwand 42, sowie (d) eine vierte, den Hohlraum 20 zum Innenraum 7 hin begrenzende Kanalwand 43 umfassen. Die erste und dritte Kanalwand 40, 42 und/oder die zweite und vierte Kanalwand 41, 43 können zueinander parallel ausgerichtet sein. Bevorzugt können die Kanalwände 40, 41, 42, 43 im Querschnitt eine rechteckige oder quadratische Struktur bilden.

In dem Hohlraum 20 des Rahmenkörpers 5 und/oder in der Aufnahmekammer 18 des Rahmenkörpers 5 kann im Endmontagezustand beispielsweise ein, insbesondere als Gussmaterial und/oder als Pulvermaterial in den Hohlraum 20 und/oder in die Aufnahmekammer 18 des Rahmenkörpers 5 eingebrachtes, Isolationsmaterial 31 aufgenommen sein. Mit anderen Worten kann der Hohlraum 20 und/oder Bereiche der Aufnahmekammer 18 mit einem Isolationsmaterial 31 zumindest abschnittsweise, insbesondere vollständig, ausgefüllt sein.

Das Verbindungsmittel 8 kann beispielsweise kraft- und/oder form- und/oder stoffschlüssig mit dem Versteifungskörper 6 verbunden sein. Bevorzugt ist das Verbindungsmittel 8 vermittels einer Schraubverbindung mit dem Versteifungskörper 6 verbunden.

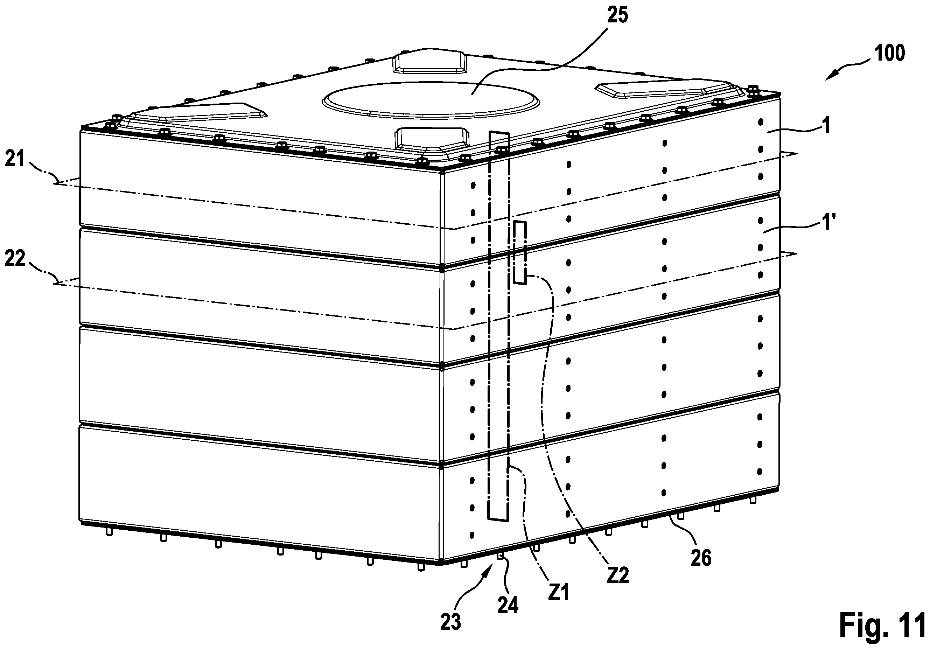

Gemäß Figur 11 kann beispielsweise eine Batteriegehäusemodulanordnung 100 aus wenigstens zwei Batteriegehäusemodulen 1, 1' gebildet werden, wobei ein erstes Batteriegehäusemodul 1 auf einem zweiten Batteriegehäusemodul 1' gestapelt angeordnet ist. Bevorzugt ist die Haupterstreckungsebene 21 eines ersten Batteriegehäusemoduls 1 im Endmontagezustand parallel zu der Haupterstreckungsebene 22 wenigstens eines weiteren Batteriegehäusemoduls 1' angeordnet.

Die wenigstens zwei gestapelt angeordneten Batteriegehäusemodule 1, 1' können beispielsweise über eine Verbindungseinrichtung 23 miteinander verbunden sein. Hierbei können beispielsweise durch die Verbindungseinrichtung 23 die wenigstens zwei gestapelten Batteriegehäusemodule 1, 1' im Endmontagezustand mit einer in den zusammengesetzten Zustand der Batteriegehäusemodul 1, 1' gerichteten Haltekraft vorgespannt werden. Mit anderen Worten wird vermittels der Verbindungseinrichtung 23 auf die gestapelten Batteriegehäusemodule 1, 1' eine diese zusammenpressende Haltekraft aufgebracht. Insbesondere wird diese Haltekraft gleichverteilt über den Umfang bzw. über den Randabschnitt der Batteriegehäusemodule 1, 1' auf diese eingebracht.

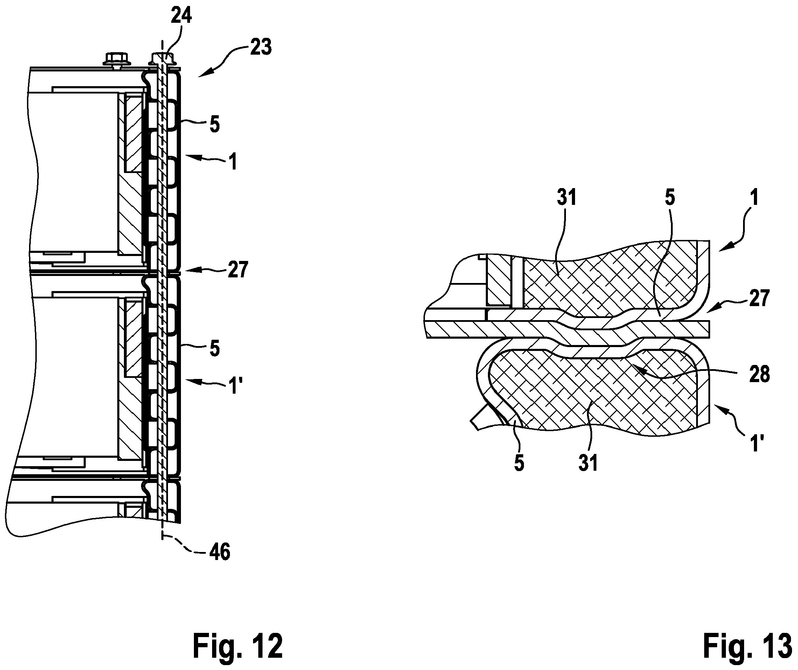

Die Verbindungseinrichtung 23 kann beispielsweise eine Vielzahl (wenigstens zwei) an, insbesondere stangenförmiger, Verbindungselemente 24 umfassen, welche zumindest abschnittsweise, bevorzugt überwiegend, besonders bevorzugt vollständig, (a) durch einen Rahmenkörper 5 und/oder durch ein Verbindungsmittel 8 des ersten Batteriegehäusemoduls 1 und (b) durch einen Rahmenkörper 5 und/oder durch ein Verbindungsmittel 8 des zweiten Batteriegehäusemoduls 1' hindurchgeführt sind bzw. dieses durchdringen. Hierbei können die hiervon betroffenen Rahmenkörper 5 und/oder die Verbindungsmittel 8 einen zumindest abschnittsweise geschlossenen Durchführkanal aufweisen, durch welchen die Verbindungseinrichtung 23 zumindest teilweise hindurchgeführt wird. In der in Figur 12 dargestellten Ausführungsform umfasst die Verbindungseinrichtung 23 wenigstens ein als stabförmigen Körper ausgebildetes Verbindungselement 24. Alternativ oder zusätzlich kann die Verbindungseinrichtung 23 wenigstens ein biegeschlaff ausgebildetes Verbindungselement 24 aufweisen, welches einer Zugspannung ausgesetzt wird und hierdurch eine Druckkraft auf die Schnittstelle der wenigstens zwei Batteriegehäusemodul 1, 1' aufbringt.

Die Verbindungseinrichtung 23 kann beispielsweise wenigstens zwei gestapelte Batteriegehäusemodule 1, 1' und (a) einen ein oberes Batteriegehäusemodul 1 abschließenden Deckelkörper 25 und/oder (b) einen ein unteres Batteriegehäusemodul 1' abschließenden Bodenkörper 26 miteinander verbinden. Hierzu kann die Verbindungseinrichtung 23 durch entsprechende Durchtrittskanäle bzw. Durchtrittsöffnungen der Batteriegehäusemodule 1, 1' sowie des Deckelkörpers 25 hindurchgeführt werden. Die Durchtrittskanäle und die Durchtrittsöffnungen können koaxial zueinander ausgerichtet sein, vgl. Durchgangslinie 46 in Figur 3. Der Rahmenkörper 5 weist mehrere koaxial platzierte Öffnungen 47 in den, insbesondere parallel zueinander verlaufenden, Wandungsabschnitten 29 auf, durch diese Öffnungen 47 wird der Durchtrittskanal für wenigstens einen Teil der Verbindungseinrichtung 23 gebildet, vgl. Durchgangslinie 46. Es ist möglich, dass die Durchtrittskanäle geradlinig, insbesondere senkrecht zur Haupterstreckungsebene des Gehäuserahmens verlaufend, in dem wenigstens einen Rahmenkörper 5 vorliegen und/oder Verbindungsmittel 8 ausgebildet sind. Diese Durchtrittskanäle können als Öffnungen 47 in den Wandungsabschnitten 29 des Rahmenkörpers 5 ausgebildet sein, wobei die Öffnungen 47 der Durchtrittskanäle wenigstens einen Hohlraum 20 und wenigstens eine Aufnahmekammer 18 miteinander verbinden und/oder durchziehen. Die Öffnungen 47 zur späteren Durchführung bzw. Aufnahme wenigstens eines Teils der Verbindungseinrichtung 23 können zur Einbringung von Isolationsmaterial 31 in die Aufnahmekammer 18 und/oder in den Hohlraum 20 verwendet werden. So kann während des Herstellungsprozesses ein Applikator (nicht dargestellt), insbesondere eine Isolationsmaterial 31 abgebende Düse, während oder vor dem Abgeben des Isolationsmaterials 31 zumindest abschnittsweise in diese Öffnungen 47 bzw. in den Durchtrittskanal einragen bzw. eintauchen. Zur späteren zumindest teilweisen Aufnahme der Verbindungseinrichtung 23 in dem Durchtrittskanal kann das dort befindliche Isolationsmaterial 31 entfernt oder verdrängt werden. Alternativ wird während des Isolationsmaterial 31 in den Hohlraum 20 und/oder in die Aufnahmekammer 18 einbringenden Einbringprozesses der Verbleib von Isolationsmaterial im Durchtrittskanal durch ein Platzhaltermittel (nicht dargestellt) verhindert. Damit kann der Rahmenkörper 5 und/oder das Verbindungsmittel 8 Öffnungen 47 bzw. einen Durchtrittskanal mit einer Doppelfunktion aufweisen, nämlich zur Nutzung als Einbringort für Isolationsmaterial 31 und als Aufnahmeort für wenigstens einen Teil der Verbindungseinrichtung 23.

An einem Kontaktbereich 27 von Rahmenkörpern 5 der Gehäuserahmen 4 zweier gestapelt aneinander gesetzter Batteriegehäusemodule 1, 1' können beispielsweise zumindest abschnittsweise, bevorzugt überwiegend, besonders bevorzugt vollumfänglich (d. h. z. B. einen geschlossenen Ring ausbildend, ggf. mit Ausnahme der durchtretenden Verbindungseinrichtung 23), eine Eingriffs- und Gegenelementstruktur 28 an den jeweiligen Rahmenkörpern 5 ausgebildet sein, vgl. Figur 13. Eine derartige formschlüssige Verbindungskomponente an der Verbindungsstelle der Batteriegehäusemodule 1, 1' und/oder zwischen einem Batteriegehäusemodul 1, 1' und einem Deckelkörper 25 und/oder einem Bodenkörper 26 kann die Anforderung an die Ausführung der über die Verbindungseinrichtung 23 auf den Stapel einwirkenden Haltekraft reduzieren.

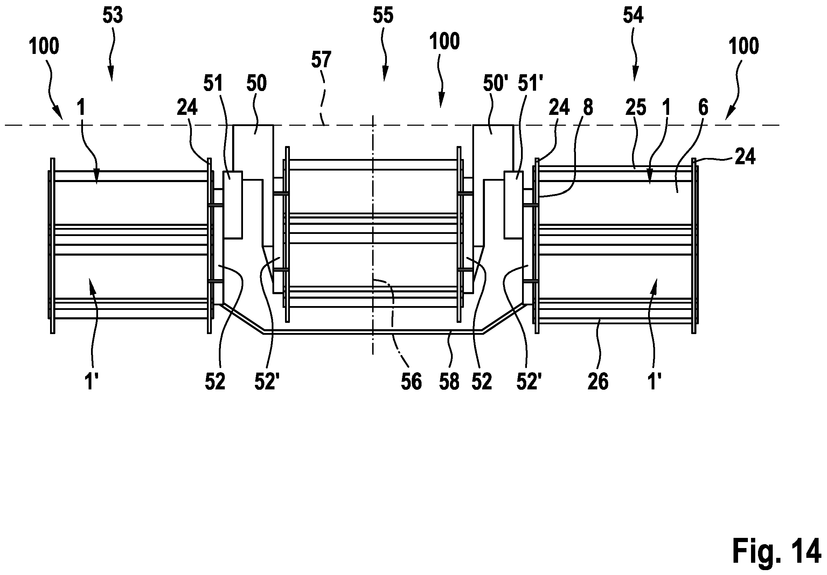

In Figur 14 ist eine beispielhafte Anordnung bzw. Befestigung eines Batteriegehäusemoduls 1, 1' und/oder einer Batteriegehäusemodulanordnung 100 an einem Fahrzeug 3 dargestellt. Das Fahrzeug 3 kann beispielsweise ein Kraftfahrzeug, insbesondere ein Nutzfahrzeug sein. Figur 14 zeigt eine Querschnittsansicht eines Fahrzeugs 3 quer zu dessen Längsachse, wobei lediglich vereinfacht die tragende Fahrzeugstruktur 13, beispielsweise das Chassis, dargestellt ist. Die in der Mitte 56 des Fahrzeugs 3 liegende Mittellängsachse ist als vertikal verlaufende Strichlinie dargestellt. Das Chassis besteht hierbei beispielsweise aus zwei Längsträgern 50, 50', an welchen über optionale Fahrzeughilfsträger 51, 51' und Batteriegehäusemodulhilfsträger 52, 52' jeweils zwei Batteriegehäusemodule 1, 1' umfassende Batteriegehäusemodulanordnungen 100 befestigt sind. Die Befestigung der Batteriegehäusemodule 1, 1' oder der Batteriegehäusemodulhilfsträger 52, 52' an den Längsträgern 50, 50' kann beispielsweise auch direkt erfolgen. Die am Fahrzeug 3 befestigte Batteriegehäusemodulanordnung 100 kann auch drei oder vier Batteriegehäusemodule 1, 1' umfassen.

Das wenigstens eine Batteriegehäusemodul 1, 1' kann beispielsweise an einem seitlich zu einem Längsträger 50, 50' verlaufenden Seitenbereich 53, 54 des Fahrzeugs 3 und/oder in einem zwischen zwei Längsträgern 50, 50' gebildeten Zwischenbereich 55 angeordnet sein. Auch ist es möglich an einem ersten Seitenbereich 53, d. h. an einem nach außen weisenden Bereich eines ersten Längsträgers 50 wenigstens ein erstes Batteriegehäusemodul 1, 1' und an einem weiteren, an der dem ersten Seitenbereich 53 abgewandten Seiten des zweiten Längsträgers 50' gelegenen Seitenbereich 54 wenigstens ein zweites Batteriegehäusemodul 1, 1' anzuordnen. Alternativ oder zusätzlich kann zwischen den beiden Längsträgern 50, 50' wenigstens ein Batteriegehäusemodul 1, 1' aufgenommen sein. Die Anordnung der wenigstens zwei Batteriegehäusemodule 1, 1' kann optional unterhalb einer von dem den Längsträgern 50, 50' gebildeten Oberkante 57 liegen.

Sofern wenigstens ein erstes Batteriegehäusemodul 1, 1' und/oder eine erste Batteriegehäusemodulanordnung 100 auf einem ersten Seitenbereich 53 und wenigstens ein weiteres Batteriegehäusemodul 1, 1' und/oder eine weitere Batteriegehäusemodulanordnung 100 auf einem weiteren, insbesondere von dem ersten Seitenbereich 53 gegenüberliegenden Seitenbereich 54 angeordnet oder ausgebildet ist, kann es sich als zweckmäßig erweisen die beiden Gruppen an Batteriegehäusemodulen 1, 1' bzw. Batteriegehäusemodulanordnungen 100 vermittels einer Abstützstruktur 58 miteinander zu verbinden. Hierbei kann die Abstützstruktur 58 am Fahrzeug abgestützt sein, z. B. am Längsträger 50, 50' und/oder am Fahrzeughilfsträger 51, 51'. Es ist auch möglich, dass die Abstützstruktur 58 den Zwischenbereich 55 und die den Zwischenbereich 55 definierenden Längsträger 50, 50' nicht berührt. Mit anderen Worten kann die Abstützstruktur 58 ohne Verbindungspunkte zu dem zentralen Bereich des Fahrzeugs Abstützkräfte der beiden an den Seitenbereichen 53, 54 angeordneten Batteriegehäusemodule 1, 1' bzw. Batteriegehäuseanordnungen 100 übertragen. Die Abstützstruktur 58 kann beispielsweise an den Batteriegehäusemodulhilfsträgern 52, 52' und/oder an den Fahrzeughilfsträgern 51, 51' befestigt sein.

Wenigstens zwei Batteriegehäusemodule 1, 1' können beispielsweise außenseitig miteinander über einen Batteriegehäusemodulhilfsträger 52, 52' miteinander verbunden sein. Damit kann der Batteriegehäusemodulhilfsträger 52, 52' als Teil einer Verbindungseinrichtung 23 wirken.

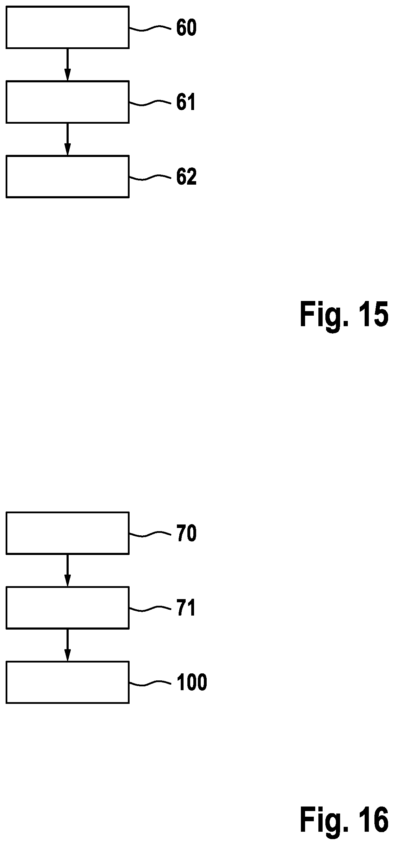

In Figur 15 ist ein Verfahren zur Herstellung eines Batteriegehäusemoduls 1, 1' schematisch dargestellt, wonach zunächst ein Bereitstellen 60 eines zumindest einen, insbesondere profilförmigen, Rahmenkörper 5 aufweisenden Gehäuserahmens 4 erfolgt. Danach erfolgt ein Verbinden 61 wenigstens eines in einem Innenraum 7 des Gehäuserahmens 4 angeordneten Versteifungskörpers 6 mit einem Verbindungsmittel 8 über eine erste Verbindungsschnittstelle 9 des Versteifungsköpers 6. Schließlich wird ein Verbinden 62 des Verbindungsmittels 8 über eine weitere Verbindungsschnittstelle 10 mit einer das Batteriegehäusemodul 1, 1' tragenden Fahrzeugstruktur 13 eines Fahrzeugs 3 ausgeführt. Damit kann ein Batteriegehäusemodul 1, 1' als Vormontagebaugruppe konzipiert werden, welche als Baugruppe an der Fahrzeugstruktur 13 verbaubar ist.

Gemäß Figur 16 ist ein Verfahren zur Herstellung einer hierin beschriebenen Batteriegehäusemodulanordnung 100 schematisch dargestellt. In einem ersten Verfahrensschritt erfolgt ein Bereitstellen 70 wenigstens zweier Batteriegehäusemodule 1, 1', welche jeweils wenigstens aus einem einen Innenraum 7 zur Aufnahme wenigstens einer Batterieeinheit 2 definierenden Gehäuserahmen 4 bestehen. Nachfolgend erfolgt ein Anordnen 71 eines ersten Batteriegehäusemoduls 1 auf einem zweiten Batteriegehäusemodul 1' zur Ausbildung einer einen Stapel an Batteriegehäusemodulen 1, 1' bildenden Batteriegehäusemodulanordnung 100.

### Bezugszeichenliste

- 1, 1': Batteriegehäusemodul
- 2: Batterieeinheit
- 3: Fahrzeug
- 4: Gehäuserahmen
- 5: Rahmenkörper
- 6: Versteifungskörper
- 7: Innenraum
- 8: Verbindungsmittel
- 9: erste Verbindungsschnittstelle
- 10: weitere Verbindungschnittstelle
- 11: Bereich von 7
- 12: kraftübertragende Struktur
- 13: Fahrzeugstruktur
- 14: Seite von 5 (7 zugewandt)
- 15: Seite von 5 (8 abgewandt)
- 16: Zwischenraum
- 17: Eckelement
- 18: Aufnahmekammer von 5
- 19: Eingriffsabschnitt von 8
- 20: Hohlraum von 5
- 21: Haupterstreckungsebene von 1
- 22: Haupterstreckungsebene von 1'
- 23: Verbindungseinrichtung
- 24: Verbindungselement von 23
- 25: Deckelkörper
- 26: Bodenkörper
- 27: Kontaktbereich zwischen 1, 1'
- 28: Eingriffs- und Gegenelementstruktur
- 29: Wandungsabschnitt von 5
- 30: Außenseite
- 31: Isolationsmaterial
- 32: erster Aufnahmeabschnitt von 8
- 33: weiterer Aufnahmeabschnitt von 8
- 34: Hülsenkörper
- 35: Pfeile
- 36: Block
- 37, 37': Block
- 38: Abdeckelement
- 39: Schnittstellenelement von 6
- 40: erste Kanalwand
- 41: zweite Kanalwand
- 43: dritte Kanalwand
- 44: vierte Kanalwand
- 45: Prägestruktur von 6
- 46: Durchtrittslinie
- 47: Öffnung
- 48: Haupterstreckungsachse von 6
- 49: Hauptfügerichtung
- 50, 50': Längsträger
- 51, 51': Fahrzeughilfsträger
- 52, 52': Batteriegehäusemodulhilfsträger
- 53: erster Seitenbereich
- 54: zweiter Seitenbereich
- 55: Zwischenbereich
- 56: Mitte von 3
- 57: Oberkante von 50, 50'
- 58: Abstützstruktur
- 59: Kühleinrichtung
- 60: Bereitstellen
- 61: Verbinden
- 62: Verbinden
- 63: Versteifungseinrichtung
- 64: Verbindungshilfsmittel
- 70: Bereitstellen
- 71: Anordnen
- 100: Batteriegehäusemodulanordnung
- α: Winkel zwischen 48 und 49

## Patentansprüche

1. Batteriegehäusemodulanordnung (100) zur Aufnahme zumindest einer Batterieeinheit (2), insbesondere einer Batterieeinheit (2) einer Traktionsbatterie, eines elektromotorisch antreibbaren Fahrzeugs (3), umfassend wenigstens zwei Batteriegehäusemodule (1, 1') jeweils bestehend aus einem Gehäuserahmen (4), welcher einen Innenraum (7) zur Aufnahme zumindest einer Batterieeinheit (2) definiert, wobei ein erstes Batteriegehäusemodul (1) auf einem zweiten Batteriegehäusemodul (1') gestapelt angeordnet ist.

2. Batteriegehäusemodulanordnung (100) nach Anspruch 1, **dadurch gekennzeichnet, dass** die Haupterstreckungsebene (21) eines ersten Batteriegehäusemoduls (1) im Endmontagezustand parallel zu der Haupterstreckungsebene (22) wenigstens eines weiteren Batteriegehäusemodul (1') angeordnet ist.

3. Batteriegehäusemodulanordnung (100) nach Anspruch 1 oder 2, **dadurch gekennzeichnet, dass** der Gehäuserahmen (4) zumindest einen Rahmenkörper (5) umfasst, wobei Rahmenkörper (5) als Profilkörper ausgebildet ist und aus einem Umformverfahren hergestellt ist, bevorzugt ist bzw. sind der profilartige Rahmenkörper (5) und/oder der Versteifungskörper (6) in einem Biegeumformverfahren, besonders bevorzugt in einem Profilierverfahren, hergestellt.

4. Batteriegehäusemodulanordnung (100) nach einem der vorhergehenden Ansprüche, **gekennzeichnet durch**
- wenigstens einen Versteifungskörper (6), welcher in dem Innenraum (7) angeordnet ist und den Innenraum (7) in separate Bereiche (11) unterteilt, und
- wenigstens ein Verbindungsmittel (8), welches eine Verbindungsschnittstelle (9) zum Verbinden mit dem Versteifungskörper (6) unter Ausbildung einer kraftübertragenden Struktur (12) des Batteriegehäusemoduls (1, 1') aufweist, wobei die kraftübertragende Struktur des Batteriegehäusemoduls (1, 1') eingerichtet ist, Kräfte auf eine das Batteriegehäusemodul (1, 1') tragende Fahrzeugstruktur (13) zu übertragen.

5. Batteriegehäusemodulanordnung (100) nach einem der vorhergehenden Ansprüche, **dadurch gekennzeichnet, dass** die wenigstens zwei gestapelt angeordneten Batteriegehäusemodule (1, 1') über eine Verbindungseinrichtung (23) miteinander verbunden sind, vorzugsweise werden durch die Verbindungseinrichtung (23) die wenigstens zwei gestapelten Batteriegehäusemodule (1, 1') im Endmontagezustand mit einer in den zusammengesetzten Zustand der Batteriegehäusemodul (1, 1') gerichteten Haltekraft vorgespannt.

6. Batteriegehäusemodulanordnung (100), nach Anspruch 5, **dadurch gekennzeichnet, dass** die Verbindungseinrichtung (23) eine Vielzahl an, insbesondere stangenförmiger, Verbindungselemente (24) umfasst, welche zumindest abschnittsweise, bevorzugt überwiegend, besonders bevorzugt vollständig,
- durch einen Rahmenkörper (5) und/oder durch ein Verbindungsmittel (8) des ersten Batteriegehäusemoduls (1) und
- durch einen Rahmenkörper (5) und/oder durch ein Verbindungsmittel (8) des zweiten Batteriegehäusemoduls (1') hindurchgeführt sind.

7. Batteriegehäusemodulanordnung (100) nach Anspruch 5 oder 6, **dadurch gekennzeichnet, dass** die Verbindungseinrichtung (23) wenigstens zwei gestapelte Batteriegehäusemodule (1, 1') und
- einen ein oberes Batteriegehäusemodul (1) abschließenden Deckelkörper (25) und/oder
- einen ein unteres Batteriegehäusemodul (1') abschließenden Bodenkörper (26) miteinander verbindet.

8. Batteriegehäusemodulanordnung (100) nach einem der vorhergehenden Ansprüche, **dadurch gekennzeichnet, dass** an einem Kontaktbereich (27) von Rahmenkörpern (5) der Gehäuserahmen (4) zweier gestapelt aneinander gesetzter Batteriegehäusemodule (1, 1') zumindest abschnittsweise, bevorzugt überwiegend, besonders bevorzugt vollumfänglich, eine Eingriffs- und Gegenelementstruktur (28) an den jeweiligen Rahmenkörpern (5) ausgebildet ist.

9. Batteriegehäusemodulanordnung (100) nach einem der Ansprüche 4 bis 8, **dadurch gekennzeichnet, dass** das Verbindungsmittel (8) eine erste Verbindungsschnittstelle (9) zum Verbinden mit dem Versteifungskörper (6) und eine weitere Verbindungsschnittstelle (10) zum Verbinden mit einer das Batteriegehäusemodul (1, 1') tragenden Fahrzeugstruktur (13) umfasst, bevorzugt ist wenigstens eine Verbindungsschnittstelle (9, 10), besonders bevorzugt sind die erste und die zweite Verbindungsschnittstelle (9, 10), als Schnittstelle(n) einer Schraubverbindung ausgebildet.

10. Batteriegehäusemodul (1, 1') nach einem der vorhergehenden Ansprüche, **dadurch gekennzeichnet, dass** der Gehäuserahmen (4) zumindest abschnittsweise durch wenigstens zwei, zwischen sich einen Zwischenraum (16) aufweisende Rahmenkörper (5) gebildet wird, wobei zumindest abschnittsweise in dem Zwischenraum (16) ein, insbesondere die Rahmenkörper (5) miteinander verbindendes, Verbindungsmittel (8) angeordnet ist.

11. Batteriegehäusemodul (1, 1') nach Anspruch 10, **dadurch gekennzeichnet, dass** der Gehäuserahmen (4) rechteckig ausgebildet ist und/oder die Form eines Quaders aufweist und wenigstens ein zwei Rahmenkörper (5) oder wenigstens ein einen Rahmenkörper (5) mit einem Verbindungsmittel (8) verbindender Eckabschnitt des Gehäuserahmens (4) durch ein Eckelement (17) gebildet wird, wobei das Eckelement (17) in einem urformenden und/oder trennenden Fertigungsverfahren hergestellt ist.

12. Batteriegehäusemodulanordnung (100) nach einem der vorhergehenden Ansprüche, **dadurch gekennzeichnet, dass** zumindest ein Rahmenkörper (5) des Gehäuserahmens (4) wenigstens einen Hohlraum (20) definiert, wobei Wandungsabschnitte (29) des Rahmenkörpers (5) den Hohlraum (20) zu dem Innenraum (7) des Gehäuserahmens (4) und/oder zu einer Aufnahmekammer (18) des Rahmenkörpers (5) und/oder zu einer Außenseite (30) des Gehäuserahmens (4) begrenzen.

13. Batteriegehäusemodul (1, 1') nach Anspruch 12, **dadurch gekennzeichnet, dass** in dem Hohlraum (20) des Rahmenkörpers (5) und/oder in der Aufnahmekammer (18) des Rahmenkörper (5) im Endmontagezustand ein, insbesondere als Gussmaterial und/oder als Pulvermaterial in den Hohlraum (20) und/oder in die Aufnahmekammer (18) des Rahmenkörpers (5) eingebrachtes, Isolationsmaterial (31) aufgenommen ist.

14. Verfahren zur Herstellung einer Batteriegehäusemodulanordnung (100) nach einem der vorhergehenden Ansprüche, mit den folgenden Verfahrensschritten:
- Bereitstellen wenigstens zweier Batteriegehäusemodule (1, 1'), welche jeweils wenigstens aus einem einen Innenraum (7) zur Aufnahme wenigstens einer Batterieeinheit (2) definierenden Gehäuserahmen (4) bestehen,
- Anordnen eines ersten Batteriegehäusemoduls (1) auf einem zweiten Batteriegehäusemodul (1') zur Ausbildung einer einen Stapel an Batteriegehäusemodulen (1, 1') bildenden Batteriegehäusemodulanordnung (100).

15. Kraftfahrzeug, insbesondere Nutzfahrzeug, das elektromotorisch antreibbar ist, umfassend wenigstens eine Batteriegehäusemodulanordnung (100) nach einem der Ansprüche 1 bis 13.
